(19) Europäisches Patentamt
European Patent Office
Office européen des brevets

(11) **EP 3 660 580 B1**

(12) **EUROPEAN PATENT SPECIFICATION**

(45) Date of publication and mention
of the grant of the patent:
**08.06.2022   Bulletin 2022/23**

(21) Application number: **18838405.1**

(22) Date of filing: **24.07.2018**

(51) International Patent Classification (IPC):
**G02F 1/1335** (2006.01)     **G02B 5/30** (2006.01)
**B32B 27/08** (2006.01)     **B32B 27/32** (2006.01)
**B32B 27/30** (2006.01)     **G02B 1/14** (2015.01)

(52) Cooperative Patent Classification (CPC):
**G02B 1/14; B32B 27/08; B32B 27/30; B32B 27/32;**
**G02F 1/133528;** G02B 5/3033

(86) International application number:
**PCT/KR2018/008364**

(87) International publication number:
**WO 2019/022479 (31.01.2019 Gazette 2019/05)**

(54) **POLARIZING PLATE AND LIQUID CRYSTAL DISPLAY DEVICE INCLUDING SAME**

POLARISATIONSPLATTE UND FLÜSSIGKRISTALLANZEIGEVORRICHTUNG DAMIT

PLAQUE POLARISANTE ET DISPOSITIF D'AFFICHAGE À CRISTAUX LIQUIDES COMPRENANT CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.07.2017   KR 20170094369**

(43) Date of publication of application:
**03.06.2020   Bulletin 2020/23**

(73) Proprietor: **Shanjin Optoelectronics (Suzhou) Co.,LTD.**
**Suzhou, Jiangsu, 215699 (CN)**

(72) Inventors:
• **JO, Min Yeong**
**Daejeon 34122 (KR)**
• **PARK, Jin Yong**
**Daejeon 34122 (KR)**
• **KIM, Tae Woo**
**Daejeon 34122 (KR)**
• **LEE, Eung Ki**
**Daejeon 34122 (KR)**

(74) Representative: **Wang, Bo**
**Panovision IP**
**Ebersberger Straße 3**
**85570 Markt Schwaben (DE)**

(56) References cited:
WO-A1-2013/111892     JP-A- 2002 006 133
JP-A- 2011 203 641     KR-A- 20160 122 262
KR-B1- 101 624 072     KR-B1- 101 624 072
KR-B1- 101 669 318     KR-B1- 101 669 318
KR-B1- 101 758 440     US-A1- 2003 072 078
US-A1- 2014 071 379

**Description**

[Technical Field]

The present specification claims priority to and the benefit of Korean Patent Application No. 10-2017-0094369 filed in the Korean Intellectual Property Office on July 25, 2017.
The present invention relates to a polarizing plate and a liquid crystal display device including the same.

[Background Art]

Recently, as various portable devices, such as mobile phones or laptop computers, and information electronic devices, such as HDTVs, which implement images with high definition and high quality, have been developed, the demand for a flat panel display device applied to those devices has been gradually increased. As the flat panel display device, a liquid crystal display (LCD), a plasma display panel (PDP), a field emission display (FED), an organic light emitting diode (OLED), and the like have been actively studied, but the liquid crystal display (LCD) has been currently receiving particular attention for reasons of mass-production technology, ease of driving means, the implementation of high image quality, and the implementation of a large-area screen.
Furthermore, with the need for an increase in size and a decrease in thickness with respect to the liquid crystal display device recently required, the thickness of a liquid crystal cell constituting the liquid crystal display device tends to become gradually thin. However, when the thickness of a transparent substrate included in the liquid crystal cell is decreased in order to decrease the thickness of the liquid crystal cell, there is a problem in that bending of the liquid crystal display device may occur due to stress applied by a polarizing plate.
Therefore, there is a need for a technology capable of suppressing bending of a liquid crystal display device.
US 2003 072 078 A1 describes a polarizing plate used for manufacturing a liquid crystal display, a method of manufacturing the same and a liquid crystal display using the same. The polarizing plate is formed having a laminate of a polarizing film and a transparent protective layer provided on at least one surface of the polarizing film. By heat-treating and subsequently reheat-treating, the laminate has a shrinkage force of at most 8N/10 mm width when the laminate is further left at 60° C for 1 hour. The laminate has a single hue value b of at most 4.6 NBS.
KR 101 624 072 B1 describes a PVA film having a degree of swelling of 190-210% and a thickness of 40 $\mu$m or less. After having been stretched in 30°C water in a stretch ratio of 3, the PVA film has a degree of swelling of 260% or more. A process for producing a PVA film comprises subjecting a PVA film having a degree of swelling of 250% or more to a wet heat treatment for 200 seconds or longer at a temperature of 55-100°C and a relative humidity of 80% RH or higher. A polarizing film has a dichroic ratio of 55 or more and has an orientation-direction shrinkage stress of 73 N/mm2 or less after having been held for 1 hour at a temperature of 80°C and a relative humidity of 5% in the state of having been fixed in the orientation direction.
KR 101 669 318 B1 describes a polarizing plate and a liquid crystal display device including the same. The polarizing plate comprises a polarizer, a polyester film formed on an upper surface of the polarizer and a depolarizing layer formed on an upper surface of the polyester film. A laminate of the polyester film and the depolarizing layer has a haze of 2% to 30%, and the polyester film has a thickness of 20 $\mu$m to 100 $\mu$m.

[REFERENCES OF THE RELATED ART]

[PATENT DOCUMENT]

Korean Patent Application Laid-Open No. 10-2006-0128731

[DETAILED DESCRIPTION OF THE INVENTION]

[TECHNICAL PROBLEM]

The present invention has been made in an effort to provide a polarizing plate capable of suppressing bending of a liquid crystal display device, and a liquid crystal display device including the same.
However, a technical problem to be solved by the present invention is not limited to the aforementioned problem, and the other problems that are not mentioned may be clearly understood by a person skilled in the art from the following description.

[Technical Solution]

An exemplary embodiment of the present invention provides a polarizing plate according to appended independent claim 1.

Another exemplary embodiment of the present invention provides a liquid crystal display device according to appended independent claim 9.

[Advantageous Effects]

When applied to a liquid crystal display device, a polarizing plate according to an exemplary embodiment of the present invention may minimize bending which reversibly varies when the liquid crystal display device is recovered from an environment of high temperature and/or high humidity to a use environment of room temperature and room humidity.

A liquid crystal display device according to an exemplary embodiment of the present invention has an advantage in that it is possible to minimize bending of a thin liquid crystal display device having a large area according to the change in environment.

The liquid crystal display device according to an exemplary embodiment of the present invention has an advantage in that it is possible to minimize a rainbow phenomenon caused by an optical interference phenomenon.

The effects of the present invention are not limited to the above-described effects, and effects, which are not mentioned, will be clearly understood by a person skilled in the art from the specification of the present application and the accompanying drawings.

[Brief Description of Drawings]

FIGS. 1A and 1B schematically illustrate a polarizing plate according to an exemplary embodiment of the present invention.
FIGS. 2A and 2B schematically illustrate a liquid crystal display device according to an exemplary embodiment of the present invention.
FIG. 3 is a view schematically illustrating the measurement of the bending distance of the liquid crystal display device according to an exemplary embodiment of the present invention.

[Best Mode]

Throughout the specification of the present application, when one member is disposed "on" another member, this includes not only a case where the one member is brought into contact with another member, but also a case where still another member is present between the two members.

Throughout the specification of the present application, when one part "includes" one constituent element, unless otherwise specifically described, this does not mean that another constituent element is excluded, but means that another constituent element may be further included.

Throughout the specification of the present application, "N/5 mm", which is a unit of shrinkage stress, may be converted into a general unit of shrinkage stress used in the art through the unit conversion. For example, "N/5 mm", which is a unit of shrinkage stress, may be converted into N/mm, N/cm, N/m, N/inch, kgf/mm, kgf/cm, kgf/m, kgf/inch, or the like.

Throughout this description, the unit "RH%" is used for the unit of relative humidity, which should be considered equivalent to the commonly used unit "%RH".

The present inventors found out that in the case of a liquid crystal display device with liquid crystal cells provided on both surfaces thereof, the hygroscopic property and moisture permeability of a polarizing plate were determined by physical properties of a polarizer protection film located at the outermost portion of the liquid crystal display device, and furthermore, the deformation of the liquid crystal display device could be minimized when the liquid crystal display device is exposed to high temperature and/or humid environments by adjusting physical properties of the polarizer protection film located at the outermost portion of the liquid crystal display device, thereby developing a polarizing plate described below and a liquid crystal display device including the same.

Hereinafter, the present specification will be described in more detail.

An exemplary embodiment of the present invention provides a polarizing plate including the features of appended independent claim 1.

When applied to a liquid crystal display device, the polarizing plate according to an exemplary embodiment of the present invention may minimize bending which reversibly varies when the liquid crystal display device is recovered from an environment of high temperature and/or high humidity to a use environment of room temperature and room humidity.

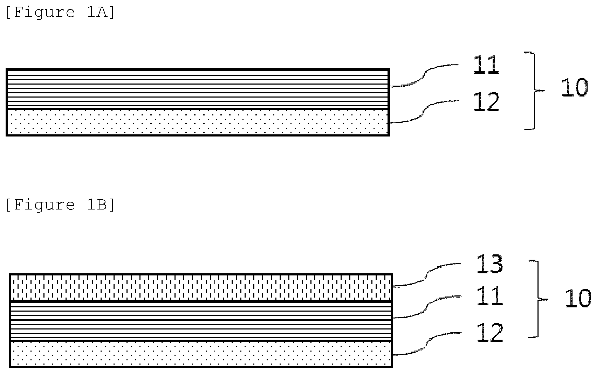

FIGS. 1A and 1B schematically illustrate a polarizing plate according to an exemplary embodiment of the present invention. Specifically, FIG. 1A illustrates a polarizing plate 10 including a polarizer 11 and a polarizer protection film 12 provided on one surface of the polarizer 11. Further, FIG. 1B illustrates the polarizing plate 10 including the polarizer 11, the polarizer protection film 12 provided on one surface of the polarizer 11, and an additional polarizer protection film 13 provided on the other surface of the polarizer 11.

According to an exemplary embodiment of the present invention, as the polarizer, a polarizer used in the art may be used. Specifically, as the polarizer, it is possible to use a film in which molecules of a polymer film formed by using polyvinyl alcohol are arranged in a predetermined direction and iodine or a dichroic material is adsorbed. Examples of the polarizer may include: a polyvinyl alcohol iodine-based polarizer in which iodine is adsorbed onto a polyvinyl alcohol film, and then the polyvinyl alcohol film is uniaxially stretched in a boric acid bath; a polyvinyl alcohol dye-based polarizer in which a dichroic dye is diffused and adsorbed onto a polyvinyl alcohol film, and then the polyvinyl alcohol film is uniaxially stretched; a polyvinyl alcohol • polyvinylene-based polarizer having a polyvinylene structure by adsorbing iodine onto a polyvinyl alcohol film and stretching the polyvinyl alcohol film; a polyvinyl alcohol • metal-based polarizer in which a metal such as silver, mercury, iron and the like is adsorbed onto a polyvinyl alcohol film; a near-ultraviolet polarizer in which a polyvinyl alcohol film is treated with a boric acid solution including potassium iodide and sodium thiosulfate; and a polarizer having a dichroic dye on the surface of and/or inside of a polyvinyl alcohol-based film composed of a modified polyvinyl alcohol containing a cationic group in the molecule thereof. However, the type of polarizer is not limited to those described above, and it is possible to select and use a polarizer used in the art according to a liquid crystal display device to which the polarizing plate is applied.

According to an exemplary embodiment of the present invention, the polarizer may be manufactured by using a method used in the art. For example, the polarizer may be manufactured by using a method of stretching a polyvinyl alcohol-based film, and then adsorbing iodine ions onto the polyvinyl alcohol-based film; a method of dyeing a polyvinyl alcohol-based film with a dichroic dye, and then stretching the polyvinyl alcohol-based film; a method of stretching a polyvinyl alcohol-based film, and then dyeing the polyvinyl alcohol-based film with a dichroic dye; a method of printing a dichroic dye onto a polyvinyl alcohol-based film, and then stretching the polyvinyl alcohol-based film; a method of stretching a polyvinyl alcohol-based film, and then printing a dichroic dye onto the polyvinyl alcohol-based film; and the like. Specifically, the polarizer may be manufactured by a method of manufacturing a polarizer by dissolving iodine in a potassium iodide solution to prepare iodine ions, adsorbing the iodine ions onto a polyvinyl alcohol film, stretching the film, and then immersing the film in a 1% to 4% aqueous boric acid solution at a temperature of 30 °C to 40 °C, or a method of manufacturing a polarizer by treating a polyvinyl alcohol film with boric acid, stretching the polyvinyl alcohol film by 3 times to 7 times in a uniaxial direction, immersing the polyvinyl alcohol film in a 0.05% to 5% aqueous dichroic dye solution at a temperature of 30 °C to 40 °C to adsorb the dye onto the film, and drying the polyvinyl alcohol film at 80 °C to 100 °C to thermally fix the dye.

According to an exemplary embodiment of the present invention, the polarizer protection film has a heat shrinkage stress of 2.5 N/5 mm or more and 8 N/5 mm or less after being heated under the conditions of 70 °C and 0 RH% or more and 20 RH% or less for 75 minutes. Specifically, after being heated under the conditions of 70 °C and 5 RH% for 75 minutes, the polarizer protection film has a heat shrinkage stress of 2.5 N/5 mm or more and 8 N/5 mm or less, 2.7 N/5 mm or more and 7 N/5 mm or less, 3 N/5 mm or more and 6.5 N/5 mm or less, 3.3 N/5 mm or more and 6.3 N/5 mm or less, or 3.5 N/5 mm or more and 6 N/5 mm or less in a transverse direction (TD direction).

According to an exemplary embodiment of the present invention, when a polarizing plate including a polarizer protection film having a heat shrinkage stress within the above range is applied to a liquid crystal display device, it is possible to minimize the bending of the liquid crystal display device caused by the changes in temperature and/or humidity. Specifically, the two polarizing plates are provided in a liquid crystal cell, and the polarizer protection film are placed on the outermost portion of the liquid crystal display device, thereby effectively suppressing the bending of the liquid crystal display device caused by the changes in temperature and/or humidity. More specifically, under a circumstance in which the temperature and/or humidity conditions of the liquid crystal display device are changed, the bending of the liquid crystal display device may be minimized by appropriately offsetting the bending of a polarizer included in each of the two polarizing plates.

According to an exemplary embodiment of the present invention, the heat shrinkage stress of the polarizer protection film may be a stress in a heat shrinkage direction. The heat shrinkage direction of the polarizer protection film may mean a main heat shrinkage behavior direction of the polarizer protection film. Specifically, the polarizer protection film may have a machine direction (MD, a resin flow direction) and a transverse direction (TD, a direction orthogonal to the resin flow), and the heat shrinkage direction may mean a direction exhibiting a larger expansion stress between the heat shrinkage stress in the machine direction and the heat shrinkage stress in the transverse direction. More specifically, the heat shrinkage direction of the polarizer protection film means a heat shrinkage direction in the transverse direction (TD direction), and the heat shrinkage stress of the polarizer protection film means a heat shrinkage stress of the polarizer protection film in the transverse direction (TD direction).

According to an exemplary embodiment of the present invention, a difference between the heat shrinkage stress of the polarizer protection film in the transverse direction and the heat shrinkage stress of the polarizer protection film in the machine direction may be 2 N/5 mm or more and 7 N/5 mm or less. Specifically, the difference between the heat shrinkage stress of the polarizer protection film in the transverse direction and the heat shrinkage stress of the polarizer protection film in the machine direction may be 3 N/5 mm or more and 6.5 N/5 mm or less, or 3.5 N/5 mm or more and 6 N/5 mm or less. Specifically, the difference between the heat shrinkage stress of the polarizer protection film in the transverse direction and the heat shrinkage stress of the polarizer protection film in the machine direction may be a value measured after the polarizer protection film is heated under the conditions of 70 °C and 0 RH% or more and 20 RH% or less for 75 minutes. More specifically, the difference between the heat shrinkage stress of the polarizer protection film in the transverse direction and the heat shrinkage stress of the polarizer protection film in the machine direction may be a value measured after the polarizer protection film is heated under the conditions of 70 °C and 5 RH% for 75 minutes.

According to an exemplary embodiment of the present invention, when the difference between the heat shrinkage stress of the polarizer protection film in the transverse direction and the heat shrinkage stress of the polarizer protection film in the machine direction is within the above-described range, it is possible to implement a polarizing plate capable of effectively suppressing the bending of the liquid crystal display device caused by the changes in temperature and/or humidity. Specifically, when two polarizing plates including the polarizer protection film are provided in a liquid crystal cell and the polarizer protection film is located at the outermost portion of the liquid crystal display device, it is possible to minimize the bending of the liquid crystal display device by appropriately offsetting the bending of the polarizer included in each of the two polarizing plates under a circumstance in which heat is applied to the liquid crystal display device.

According to an exemplary embodiment of the present invention, the polarizer protection film may have a heat shrinkage stress of -0.1 N/5 mm or more and 1 N/5 mm or less in the machine direction (MD direction) after being heated under the conditions of 70 °C and 0 RH% or more and 20 RH% or less for 75 minutes. Specifically, the polarizer protection film may have a heat shrinkage stress of -0.1 N/5 mm or more and 1 N/5 mm or less or -0.05 N/5 mm or more and 1 N/5 mm or less in the machine direction after being heated under the conditions of 70 °C and 5 RH% for 75 minutes.

In the specification of the present application, the heat shrinkage stress is a value capable of identifying the degree to which a member is shrunk according to a temperature, and is obtained by exposing the member to a predetermined temperature condition, and measuring a value of stress occurring to the member in this case. Specifically, in the present invention, the heat shrinkage stress of the polarizer protection film is a maximum value among the values obtained by cutting the polarizer protection film into a length of 50 mm and a width of 5 mm in the main shrinkage direction to prepare a sample, and then using a dynamic mechanical analyzer (DMA) to fix one end and the other end of the sample at a predetermined distance, heating the sample under a predetermined humidity condition to a predetermined temperature, and then measuring, for 30 seconds, a strength (stress) required to maintain the predetermined distance at which the above-described sample is fixed.

According to an exemplary embodiment of the present invention, a ratio of a heat shrinkage stress of the polarizer protection film after being heated under the conditions of 70 °C and 0 RH% or more and 20 RH% or less for 75 minutes (heat shrinkage stress after being heated) to a heat shrinkage stress of the polarizer protection film after being heated under the conditions of 70 °C and 0 RH% or more and 20 RH% or less for 75 minutes and left to stand under the conditions 25 °C and 40 RH% or more and 50 RH% or less for 45 minutes (heat shrinkage stress after being left stand at room temperature) may be 1:0.3 to 1:0.8. Specifically, a ratio of the heat shrinkage stress of the polarizer protection film after being heated under the conditions of 70 °C and 5 RH% for 75 minutes to the heat shrinkage stress of the polarizer protection film after being heated under the conditions of 70 °C and 5 RH% for 75 minutes and left to stand under the conditions of 25 °C and 45 RH% for 45 minutes may be 1:0.3 to 1:0.8 or 1:0.35 to 1:0.75.

By adjusting the ratio of the heat shrinkage stress of the polarizer protection film after being heated to the heat shrinkage stress of the polarizer protection film after being left to stand at room temperature within the above-described range, it is possible to provide a polarizing plate capable of effectively suppressing the bending of the liquid crystal display device caused by the changes in temperature and/or humidity.

The heat shrinkage stress of the polarizer protection film after being heated and the heat shrinkage stress of the polarizer protection film after being left to stand at room temperature mean a heat shrinkage stress of the polarizer protection film in the transverse direction (TD direction).

According to an exemplary embodiment of the present invention, the polarizer protection film may have a shrinkage stress of 2 N/5 mm or more and 7 N/5 mm or less, 2.5 N/5 mm or more and 6.5 N/5 mm or less, or 3 N/5 mm or more and 6 N/5 mm or less in the transverse direction (TD direction) under the room temperature and room humidity (20 °C, 50 RH%) conditions before being exposed to the humidified and heated atmosphere.

Further, according to an exemplary embodiment of the present invention, the polarizer protection film may have a shrinkage stress of 0.5 N/5 mm or more and 2 N/5 mm or less in the machine direction (MD direction) in the room temperature and room humidity (20 °C, 50 RH%) environments before being exposed to the humidified and heated atmosphere.

According to an exemplary embodiment of the present invention, the polarizing plate further includes an additional polarizer protection film provided on the other surface of the polarizer, and the heat shrinkage stress of the polarizer protection film may be larger than the heat shrinkage stress of the additional polarizer protection film. It is possible to provide a liquid crystal display device of which the bending caused by the changes in temperature and/or humidity is suppressed by using the polarizing plate including the polarizer protection film having a heat shrinkage stress larger than the heat shrinkage stress of the additional polarizer protection film.

According to an exemplary embodiment of the present invention, after the polarizer protective films are heated under the conditions of 70 °C and 0 RH% or more and 20 RH% or less for 75 minutes, the ratio of the heat shrinkage stress of the polarizer protection film to the heat shrinkage stress of the additional polarizer protection film may be 1:0.001 to 1:0.2, or 1:0.003 to 1:0.15. By adjusting the ratio of the heat shrinkage stress of the polarizer protection film to the heat shrinkage stress of the additional polarizer protection film within the above-described range, it is possible to appropriately control the total heat shrinkage stress of the polarizing plate caused by temperature and/or humidity, and accordingly, it is possible to effectively suppress a liquid crystal display device, to which the polarizing plate is applied, from being bent.

The ratio of the heat shrinkage stress of the polarizer protection film to the heat shrinkage stress of the additional polarizer protection film may be a ratio of the heat shrinkage stress of the polarizer protection film in the transverse direction to the heat shrinkage stress of the additional polarizer protection film in the transverse direction after the polarizer protection films are heated under the conditions of 70 °C and 5 RH% for 75 minutes.

According to an exemplary embodiment of the present invention, the additional polarizer protection film may have a heat shrinkage stress of -1 N/5 mm or more and 4 N/5 mm or less. Specifically, the additional polarizer protection film may have a heat shrinkage stress of -1 N/5 mm or more and 4 N/5 mm or less, -0.5 N/5 mm or more and 3.5 N/5 mm or less, or -0.3 N/5 mm or more and 3.0 N/5 mm or less in the transverse direction after being heated under the conditions of 70 °C and 5 RH% for 75 minutes.

According to an exemplary embodiment of the present invention, the polarizer protection film may have a moisture permeability of 0.001 $g/m^2$•day or more and 1,000 $g/m^2$•day or less. Specifically, the polarizer protection film may have a moisture permeability of 0.001 $g/m^2$•day or more and 800 $g/m^2$•day or less, 0.001 $g/m^2$•day or more and 600 $g/m^2$•day or less, 0.001 $g/m^2$•day or more and 400 $g/m^2$•day or less, 0.001 $g/m^2$•day or more and 250 $g/m^2$•day or less, 0.001 $g/m^2$•day or more and 200 $g/m^2$•day or less, 0.001 $g/m^2$•day or more and 150 $g/m^2$•day or less, or 0.001 $g/m^2$•day or more and 100 $g/m^2$•day or less.

According to an exemplary embodiment of the present invention, it is possible to effectively suppress the deformation of the liquid crystal display device by adjusting the moisture permeability of the polarizer protection film within the above-described range to minimize the bending of the polarizer included in the polarizing plate caused by the moisture in the high humid environments.

In the present specification, the moisture permeability may be measured at 40 °C and 90 RH% by using 7002 Water Vapor Permeation Analyzer (Illinois Instruments, Inc.). Specifically, the moisture permeability of the polarizer protection film may be calculated through the mass of water decreasing in a chamber where a predetermined amount of water is filled, while maintaining the conditions of 40 °C and 90 RH% after fixing the polarizer protection film onto one surface of the chamber.

According to an exemplary embodiment of the present invention, the polarizer protection film may have a Re value of 1,000 nm or less, or 5,000 nm or more. Specifically, the polarizer protection film may have a Re value of 1,000 nm or less, 700 nm or less, 500 nm or less, 400 nm or less, or 350 nm or less. Further, the polarizer protection film may have a Re value of 5,000 nm or more, 6,000 nm or more, 6,300 nm or more, or 7,000 nm or more.

According to an exemplary embodiment of the present invention, the polarizer protection film may be any one of a polyethylene-based film having a Re value of 5,000 nm or more, a polyethylene-based film having a Re value of 1,000 nm or less, an acrylic film having a Re value of 1,000 nm or less, and a cycloolefin-based film having a Re value of 1,000 nm or less. The Re value of the polarizer protection film may depend on a material constituting the polarizer protection film. Specifically, as the polarizer protection film, it is possible to use a polyethylene-based protection film having a Re value of 5,000 nm or more, 6,000 nm or more, 6,300 nm or more, or 7,000 nm or more.

In addition, the polarizer protection film may be a polyethylene-based protection film having a Re value of 1,000 nm or less, 700 nm or less, 500 nm or less, 400 nm or less, or 350 nm or less. Specifically, it is possible to use a polyethylene-based film in which the Re value of the polarizer protection film is adjusted as described above by adjusting the stretching conditions, the heat treatment conditions, and the like for the polarizer protection film.

According to an exemplary embodiment of the present invention, the polyethylene-based film may be a polyethylene terephthalate film.

In addition, as the polarizer protection film, it is possible to use a polyethylene-based film, an acrylic film, or a cycloolefin-based film, having a Re value of 1,000 nm or less, 700 nm or less, 500 nm or less, 400 nm or less, or 350 nm or less.

When the Re value of the polarizer protection film is adjusted within the above range, the liquid crystal display device to which the polarizing plate including the polarizer protection film is applied may minimize or remove a rainbow phenomenon caused by optical interference. Specifically, when a polyethylene-based film having a relatively high Re value is disposed on the outermost surface of a liquid crystal display device, a rainbow phenomenon caused by optical interference may occur, but when a film having a very high Re value of 5,000 nm or more is used, a rainbow phenomenon may be prevented by reducing a polarization distribution period.

According to an exemplary embodiment of the present invention, the Re value is an in-plane phase retardation value, and is calculated by the following Equation 1.

$$[\text{Equation 1}]$$
$$Re = (nx - ny) \times d$$

In Equation 1, Re is an in-plane phase retardation value, nx means a refractive index in the x-axis direction, ny means a refractive index in the y-axis direction, and d means a thickness of a film.

According to an exemplary embodiment of the present invention, the polarizer protection film may be processed at a temperature which is equal to or less than a glass transition temperature thereof. In general, a polymer protection film exhibits a behavior in which the shrinkage stress in the transverse direction and the shrinkage stress in the machine direction are similar to each other. Through a process where the polymer protection film is subjected to a heat treatment at a temperature which is equal to or more than the glass transition temperature of the polymer protection film, and then the polymer protection film is annealed, the polymer protection film may be manufactured such that the directionality rarely occurs during the shrinkage by heat, by manufacturing the polymer protection film such that the shrinkage behaviors in the machine direction and the transverse direction are similar to each other.

However, according to an exemplary embodiment of the present invention, the polarizer protection film may be processed and treated at a temperature which is equal to or less than the glass transition temperature of the polarizer protection film. By processing the polarizer protection film under the conditions described above, the polarizer protection film exhibits a big difference between the heat shrinkage stresses in the machine direction and the transverse direction. Accordingly, it is possible to suppress the bending of a liquid crystal display device including the polarizing plate.

Further, according to an exemplary embodiment of the present invention, the polarizer protection film may also be exposed to a temperature exceeding the glass transition temperature within 1 minute during the processing and treatment. Accordingly, the polarizer protection film may exhibit the big difference between the heat shrinkage stresses in the machine direction and the transverse direction.

According to an exemplary embodiment of the present invention, the polarizer protection film may have a thickness of 10 μm or more and 120 μm or less. Specifically, the polarizer protection films may each have a thickness of 40 μm or more and 100 μm or less. By adjusting the thickness of the polarizer protection film within the above-described range, it is possible to improve the durability of the polarizing plate.

Another exemplary embodiment of the present invention provides a liquid crystal display device including: a liquid crystal cell; a first polarizing plate provided on one surface of the liquid crystal cell; and a second polarizing plate provided on the other surface of the liquid crystal cell, in which the first polarizing plate includes: a first polarizer; and a first polarizer protection film provided on one surface of the first polarizer, the second polarizing plate includes: a second polarizer; and a second polarizer protection film provided on one surface of the second polarizer, the first polarizer protection film and the second polarizer protection film are provided on a side opposite to a side where the liquid crystal cell locates, moisture shrinkage directions of the first polarizer and the second polarizer are orthogonal to each other, a heat shrinkage direction of the first polarizer protection film is orthogonal to a moisture shrinkage direction of the first polarizer, a heat shrinkage direction of the second polarizer protection film is orthogonal to a moisture shrinkage direction of the second polarizer, and the first polarizer protection film and the second polarizer protection film each have a heat shrinkage stress of 2.5 N/5 mm or more and 8 N/5 mm or less after being heated under the conditions of 70 °C and 0 RH% or more and 20 RH% or less for 75 minutes.

A liquid crystal display device according to an exemplary embodiment of the present invention has an advantage in that it is possible to minimize bending of a thin liquid crystal display device having a large area according to a change in environment. Further, the liquid crystal display device has an advantage in that it is possible to minimize a rainbow phenomenon caused by an optical interference phenomenon.

According to an exemplary embodiment of the present invention, the first polarizing plate and the second polarizing plate to be included in the liquid crystal display device may be the polarizing plate according to an exemplary embodiment of the present invention. Specifically, the first polarizer and the second polarizer may be the polarizer of the polarizing plate according to an exemplary embodiment of the present invention, and the first polarizer protection film and the second polarizer protection film may be the polarizer protection film of the polarizing plate according to an exemplary embodiment of the present invention.

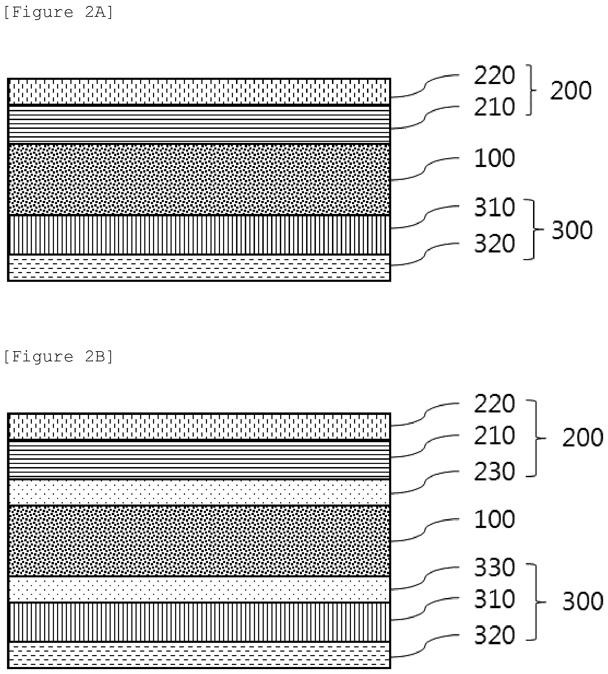

FIGS. 2A and 2B schematically illustrate a liquid crystal display device according to an exemplary embodiment of the present invention. Specifically, FIG. 2A illustrates that a first polarizing plate 200 in which a first polarizer 210 and a first polarizer protection film 220 are sequentially laminated is provided on one surface of a liquid crystal cell 100, and a second polarizing plate 300 in which a second polarizer 310 and a second polarizer protection film 320 are sequentially laminated is provided on the other surface of the liquid crystal cell 100. Further, FIG. 2B illustrates that the first polarizing plate 200 in which a third polarizer protection film 230, the first polarizer 210, and the first polarizer protection film 220 are sequentially laminated is provided on one surface of the liquid crystal cell 100, and the second polarizing plate 300 in which a fourth polarizer protection film 330, the second polarizer 310, and the second polarizer protection film 320 are sequentially laminated is provided on the other surface of the liquid crystal cell 100.

The third polarizer protection film and the fourth polarizer protection film of the liquid crystal display device according to an exemplary embodiment of the present invention may be the additional polarizer protection film of the polarizing plate according to an exemplary embodiment of the present invention.

According to an exemplary embodiment of the present invention, a moisture shrinkage direction of the first polarizer may be the same as an orientation axis direction of the first polarizer, and a moisture shrinkage direction of the second polarizer may be the same as an orientation direction of the second polarizer. Specifically, the moisture shrinkage directions of the first polarizer and the second polarizer may be the same as stretching axis directions of the first polarizer and the second polarizer, respectively, when the first polarizer and the second polarizer are manufactured.

According to an exemplary embodiment of the present invention, the heat shrinkage direction of the first polarizer protection film is orthogonal to the moisture shrinkage direction of the first polarizer, and the heat shrinkage direction of the second polarizer protection film is orthogonal to the moisture shrinkage direction of the second polarizer. That is, with a structure in which the heat shrinkage direction of the first polarizer protection film and the heat shrinkage direction of the second polarizer protection film are orthogonal to each other, it is possible to minimize bending of the liquid crystal display device at a high temperature atmosphere.

Further, the moisture shrinkage direction of the first polarizer and the heat shrinkage direction of the second polarizer protection film may be the same as each other. In addition, the moisture shrinkage direction of the second polarizer and the heat shrinkage direction of the first polarizer protection film may be the same as each other.

When the liquid crystal display device is placed at an environment in which heat is applied thereto, the liquid crystal display device is shrunk while moisture of the first polarizer and the second polarizer is released out of the liquid crystal display device, and heat shrinkage may occur to the first polarizer protection film and the second polarizer protection film. In this case, since the moisture shrinkage direction of the first polarizer and the heat shrinkage direction of the second polarizer protection film are the same as each other, the shrinkage of the first polarizer on one surface of the liquid crystal display device may be offset by the heat shrinkage of the second polarizer protection film on the other surface of the liquid crystal display device. Furthermore, since the moisture shrinkage direction of the second polarizer and the heat shrinkage direction of the first polarizer protection film are the same as each other, the shrinkage of the second polarizer on the other surface of the liquid crystal display device may be offset by the heat shrinkage of the first polarizer protection film on one surface of the liquid crystal display device. Accordingly, the liquid crystal display device may have an advantage in that bending rarely occurs even at a high temperature atmosphere.

According to an exemplary embodiment of the present invention, the first polarizer protection film and the second polarizer protection film each have a heat shrinkage stress of 2.5 N/5 mm or more and 8 N/5 mm or less after being heated under the conditions of 70 °C and 0 RH% or more and 20 RH% or less for 75 minutes. Specifically, after being heated under the conditions of 70 °C and 5 RH% for 75 minutes, the first polarizer protection film and the second polarizer protection film may each have a heat shrinkage stress of 2.5 N/5 mm or more and 8 N/5 mm or less, 2.7 N/5 mm or more and 7 N/5 mm or less, 3 N/5 mm or more and 6.5 N/5 mm or less, 3.3 N/5 mm or more and 6.3 N/5 mm or less, or 3.5 N/5 mm or more and 6 N/5 mm or less.

By adjusting the heat shrinkage stresses of the first polarizer protection film and the second polarizer protection film within the above-described range, the bending of the polarizer included in each of the two polarizing plates may be appropriately offset in a situation where the temperature and/or humidity conditions of the liquid crystal display device are changed, thereby minimizing the bending of the liquid crystal display device.

According to an exemplary embodiment of the present invention, each of the first polarizer protection film and the second polarizer protection film may have a difference between the heat shrinkage stress in the transverse direction and the heat shrinkage stress in the machine direction, which is 2 N/5 mm or more and 7 N/5 mm or less. Specifically, each of the first polarizer protection film and the second polarizer protection film may have a difference between the heat shrinkage stress in the transverse direction and the heat shrinkage stress in the machine direction, which is 3 N/5 mm or more and 6.5 N/5 mm or less, or 3.5 N/5 mm or more and 6 N/5 mm or less. By adjusting the difference between the heat shrinkage stress in the transverse direction and the heat shrinkage stress in the machine direction with respect to each of the first polarizer protection film and the second polarizer protection film within the above-described range, the bending of the liquid crystal display device may be minimized by appropriately offsetting the bending of the polarizer included in each of the two polarizing plates in a situation where heat is applied to the liquid crystal display device.

Specifically, the difference between the heat shrinkage stress in the transverse direction and the heat shrinkage stress in the machine direction with respect to each of the first polarizer protection film and the second polarizer protection film may be a value measured after the polarizer protection films are heated under the conditions of 70 °C and 0 RH% or more and 20 RH% or less for 75 minutes. More specifically, the difference may be a value measured after the polarizer protection films are heated under the conditions of 70 °C and 5 RH% for 75 minutes.

According to an exemplary embodiment of the present invention, a ratio of a heat shrinkage stress of each of the first polarizer protection film and the second polarizer protection film after being heated under the conditions of 70 °C and 0 RH% or more and 20 RH% or less for 75 minutes to a heat shrinkage stress of each of the first polarizer protection film and the second polarizer protection film after being heated under the conditions of 70 °C and 0 RH% or more and 20 RH% or less for 75 minutes and left to stand under the conditions of 25 °C and 40 RH% or more and 50 RH% or less for 45 minutes may be 1:0.3 to 1:0.8. Specifically, a ratio of a heat shrinkage stress of each of the first polarizer protection film and the second polarizer protection film after being heated under the conditions of 70 °C and 5 RH% for 75 minutes to a heat shrinkage stress of each of the first polarizer protection film and the second polarizer protection film after being heated under the conditions of 70 °C and 5 RH% for 75 minutes and left to stand under the conditions of 25 °C and 45 RH% for 45 minutes may be 1:0.3 to 1:0.8 or 1:0.35 to 1:0.75. By adjusting a ratio of an initial heat shrinkage stress of each of the first polarizer protection film and the second polarizer protection film to a heat shrinkage stress of each of the first polarizer protection film and the second polarizer protection film after being left to stand within the above-described range, it is possible to implement a liquid crystal display device in which the bending caused by the changes in temperature and/or humidity is suppressed.

The heat shrinkage stress of each of the first polarizer protection film and the second polarizer protection film after being heated and the heat shrinkage stress of each of the first polarizer protection film and the second polarizer protection film after being left to stand at room temperature mean the heat shrinkage stress of the polarizer protection film in the transverse direction (TD direction).

In the liquid crystal display device according to an exemplary embodiment of the present invention, the first polarizing plate may further include a third polarizer protection film provided on a side where the liquid crystal cell locates, and the second polarizing plate may further include a fourth polarizer protection film provided on a side where the liquid crystal cell locates. Further, the heat shrinkage stress of the first polarizer protection film may be larger than that of the third polarizer protection film. In addition, the heat shrinkage stress of the second polarizer protection film may be larger than that of the fourth polarizer protection film. Accordingly, it is possible to provide a liquid crystal display device in which the bending caused by the changes in temperature and/or humidity is suppressed.

According to an exemplary embodiment of the present invention, after the first and third polarizer protection films are heated under the conditions of 70 °C and 0 RH% or more and 20 RH% or less for 75 minutes, the ratio of the heat shrinkage stress of the first polarizer protection film to the heat shrinkage stress of the third polarizer protection film may be 1:0.001 to 1:0.2. Specifically, the ratio of the heat shrinkage stress of the first polarizer protection film to the heat shrinkage stress of the third polarizer protection film may be 1:0.001 to 1:0.2, or 1:0.003 to 1:0.15. By adjusting the ratio of the heat shrinkage stresses of the first polarizer protection film and the third polarizer protection film within the above-described range, it is possible to suppress the polarizing plate itself from being deformed according to the temperature and/or humidity. Furthermore, it is possible to effectively suppress the liquid crystal display device from being bent according to the changes in temperature and/or humidity.

The ratio of the heat shrinkage stress of the first polarizer protection film to the heat shrinkage stress of the third polarizer protection film may be a ratio of the heat shrinkage stress of the first polarizer protection film in the transverse direction to the heat shrinkage stress of the third polarizer protection film in the transverse direction after the polarizer protection films are heated under the conditions of 70 °C and 5 RH% for 75 minutes.

Further, after the second and fourth polarizer protection films are heated under the conditions of 70 °C and 0 RH% or more and 20 RH% or less for 75 minutes, the ratio of the heat shrinkage stress of the second polarizer protection film to the heat shrinkage stress of the fourth polarizer protection film may be 1:0.001 to 1:0.2, or 1:0.003 to 1:0.15. By adjusting the ratio of the heat shrinkage stress of the second polarizer protection film to the heat shrinkage stress of the fourth polarizer protection film within the above-described range, it is possible to effectively suppress the liquid crystal display device from being bent according to the changes in temperature and/or humidity.

The ratio of the heat shrinkage stress of the second polarizer protection film to the heat shrinkage stress of the fourth polarizer protection film may be a ratio of the heat shrinkage stress of the second polarizer protection film in the transverse direction to the heat shrinkage stress of the fourth polarizer protection film in the transverse direction after the polarizer protection films are heated under the conditions of 70 °C and 5 RH% for 75 minutes.

According to an exemplary embodiment of the present invention, each of the first polarizer protection film and the second polarizer protection film may have a moisture permeability of 0.001 $g/m^2 \cdot day$ or more and 1,000 $g/m^2 \cdot day$ or less. Specifically, each of the first polarizer protection film and the second polarizer protection film may have a moisture permeability of 0.001 g/m$^2$•day or more and 800 g/m$^2$•day or less, 0.001 g/m$^2$•day or more and 600 g/m$^2$•day or less, 0.001 g/m$^2$•day or more and 400 g/m$^2$•day or less, 0.001 g/m$^2$•day or more and 250 g/m$^2$•day or less, 0.001 g/m$^2$•day or more and 200 g/m$^2$•day or less, 0.001 g/m$^2$•day or more and 150 g/m$^2$•day or less, or 0.001 g/m$^2$•day or more and 100 g/m$^2$•day or less.

Since the first polarizer protection film and the second polarizer protection film each have the low moisture permeability as described above, the bending of the first polarizer and the second polarizer caused by moisture may be minimized in a highly humid environment, and the deformation of the liquid crystal display device may be suppressed.

According to an exemplary embodiment of the present invention, the first polarizer protection film and the second polarizer protection film may each have a Re value of 1,000 nm or less, or 5,000 nm or more. Specifically, the first polarizer protection film and the second polarizer protection film may each have a Re value of 1,000 nm or less, 700 nm or less, 500 nm or less, 400 nm or less, or 350 nm or less. Further, the first polarizer protection film and the second polarizer protection film may each have a Re value of 5,000 nm or more, 6,000 nm or more, 6,300 nm or more, or 7,000 nm or more.

The Re value may depend on a material constituting the first polarizer protection film or the second polarizer protection film. Specifically, when a polyethylene-based protection film is used as the first polarizer protection film or the second polarizer protection film, it is possible to use a polyethylene-based protection film having a Re value of 5,000 nm or more, 6,000 nm or more, 6,300 nm or more, or 7,000 nm or more.

In addition, the first polarizer protection film or the second polarizer protection film may be a polyethylene-based protection film having a Re value of 1,000 nm or less, 700 nm or less, 500 nm or less, 400 nm or less, or 350 nm or less. Specifically, it is possible to use a polyethylene-based film in which the Re value of the first polarizer protection film or the second polarizer protection film is adjusted as described above by adjusting the stretching conditions, the heat treatment conditions, and the like for the first polarizer protection film or the second polarizer protection film.

Furthermore, it is possible to use a polyethylene-based film, an acrylic film, or a cycloolefin-based film having a Re value of 1,000 nm or less, 700 nm or less, 500 nm or less, 400 nm or less, or 350 nm or less as the first polarizer protection film or the second polarizer protection film.

When the Re values of the first polarizer protection film and the second polarizer protection film are adjusted within the above range, the liquid crystal display device may minimize or remove a rainbow phenomenon caused by optical interference. Specifically, when a polyethylene-based film having a relatively high Re value is disposed on the outermost side surface of a polarizing plate, a rainbow phenomenon caused by optical interference may occur, but when a film having a very high Re value of 5,000 nm or more is used, a rainbow phenomenon may be prevented by reducing a polarization distribution period.

According to an exemplary embodiment of the present invention, the first polarizer protection film may be a polyethylene-based film having a Re value of 5,000 nm or more, and the second polarizer protection film may be a polyethylene-based film having a Re value of 5,000 nm or more, an acrylic film having a Re value of 1,000 nm or less, a polyethylene-based film having a Re value of 1,000 nm or less, or a cycloolefin-based film having a Re value 1,000 nm or less.

According to an exemplary embodiment of the present invention, the third polarizer protection film and the fourth polarizer protection film may be a polyester-based film, a polyolefin-based film, an acetyl cellulose-based film, a polycarbonate-based film, a polyvinyl alcohol-based film, a polyethersulfone-based film, a polyarylate-based film, a polyimide-based film, a polyamideimide-based film, or a polyamide-based film. However, the third polarizer protection film and the fourth polarizer protection film are not particularly limited in kind, as long as the protection films do not adversely affect the function of a polarizing plate and a liquid crystal display device.

According to an exemplary embodiment of the present invention, the liquid crystal cell may be a liquid crystal cell in which the first polarizing plate and the second polarizing plate adhere to each other with a pressure sensitive adhesive (PSA) layer interposed therebewteen.

According to an exemplary embodiment of the present invention, the first polarizer protection film to the fourth polarizer protection film may be surface-treated in order to improve adhesive strength to the first polarizer and the second polarizer, or the liquid crystal cell.

According to an exemplary embodiment of the present invention, the protection films of the first polarizing plate and the second polarizing plate may be attached to a polyvinyl alcohol-based polarizer by using a bonding agent known in the art. Further, the liquid crystal cell may be attached to the first polarizing plate and the second polarizing plate by using an adhesive agent known in the art. For example, for the attachment, a UV curable adhesive agent, a solvent-based adhesive agent, a water-based adhesive agent, a heat curable adhesive agent, and the like may be used without limitation, and a solvent-based or water-based adhesive agent may be used. Specifically, a polyvinyl alcohol-based adhesive agent, a polyurethane-based adhesive agent, and the like may be used.

According to an exemplary embodiment of the present invention, the first polarizer protection film to the fourth polarizer protection film may include an additive such as a UV absorbent, an anti-blocking agent, a lubricant, an antistatic agent, and a stabilizer, if necessary.

According to an exemplary embodiment of the present invention, one or more layers selected from an anti-reflection layer, a low reflection coating layer, a brightness enhancing layer, an antistatic coating layer, and a hard coating layer may be additionally provided on the first polarizer protection film and/or the second polarizer protection film. The anti-reflection layer, the low reflection coating layer, the brightness enhancing layer, the antistatic coating layer, or the hard coating layer may be provided on a side opposite to a side where a backlight of a liquid crystal display device is provided. The anti-reflection layer, the brightness enhancing layer, or the hard coating layer may be provided on the side where a backlight of a liquid crystal display device is provided. A UV absorbent may be additionally added onto the layers, particularly, a layer disposed on an observer's side of a liquid crystal display device.

According to an exemplary embodiment of the present invention, as the liquid crystal cell, those known in the art may be used. Specifically, in the present invention, the liquid crystal cells in IPS mode, TN mode, VA mode, and the like may be used.

According to an exemplary embodiment of the present invention, the liquid crystal cell may be a liquid crystal cell in which a liquid crystal layer is provided between two transparent substrates having a thickness of 0.2 mm or more and 1.0 mm or less. Specifically, the transparent substrate may have a thickness of 0.4 mm or more and 0.7 mm or less, and the liquid crystal cell may be formed by preparing two transparent substrates having the above-described thickness and providing a liquid crystal layer between the two transparent substrates.

According to an exemplary embodiment of the present invention, the first polarizer protection film and the second polarizer protection film may each have a thickness of 10 $\mu$m or more and 120 $\mu$m or less. Specifically, the first polarizer protection film and the second polarizer protection film may each have a thickness of 40 $\mu$m or more and 100 $\mu$m or less.

According to an exemplary embodiment of the present invention, the transparent substrate may be a transparent conductive substrate such as indium tin oxide (ITO).

According to an exemplary embodiment of the present invention, after a high humidity test is performed at 20 °C and 90 RH% for 165 hours, an amount of change in bending distance of the liquid crystal display device as compared to the initial value may be 1.0 mm or less. Specifically, after a high humidity test is performed at 20 °C and 90 RH% for 165 hours, an amount of change in bending distance of the liquid crystal display device as compared to the initial value may be 0.8 mm or less, 0.6 mm or less, 0.4 mm or less, 0.3 mm or less, or 0.25 mm or less.

According to an exemplary embodiment of the present invention, after a high temperature test is performed at 70 °C and 0 RH% or more and 10 RH% or less for 168 hours, an amount of change in bending distance of the liquid crystal display device as compared to the initial value may be 0.7 mm or less. Specifically, after a high temperature test is performed at 70 °C and 5 RH% for 168 hours, an amount of change in bending distance of the liquid crystal display device as compared to the initial value may be 0.7 mm or less, 0.6 mm or less, or 0.55 mm or less.

After the high humidity test and the high temperature test are performed, an amount of change in bending distance of the liquid crystal display device may be an absolute value. Specifically, the amount of change in bending distance of the liquid crystal display device may be an absolute value of a difference between the bending distance of the liquid crystal display device before the high humidity test and the high temperature test are performed and the bending distance of the liquid crystal display device after the high humidity test and the high temperature test are performed.

According to an exemplary embodiment of the present invention, the bending distance of the liquid crystal display device may mean a bending distance occurring at a side where the first polarizer protection film provided at the outermost portion of the liquid crystal display device is located, or a bending distance occurring at a side where the second polarizer protection film locates. Specifically, the bending distance of the liquid crystal display device may mean a spaced distance from a surface of the first polarizer protection film, which is assumed as a horizontal state where bending does not occur in the liquid crystal display device to a portion protruding the most toward a side where the first polarizer protection film of the liquid crystal display device locates where bending occurs, or a spaced distance from a surface of the second polarizer protection film, which is assumed as a horizontal state where bending does not occur in the liquid crystal display device to a portion protruding the most toward a side where the second polarizer protection film of the liquid crystal display device locates where bending occurs. Further, the bending distance occurring at the side of the first polarizer protection film and the bending distance occurring at the side of the second polarizer protection film may be the same as each other.

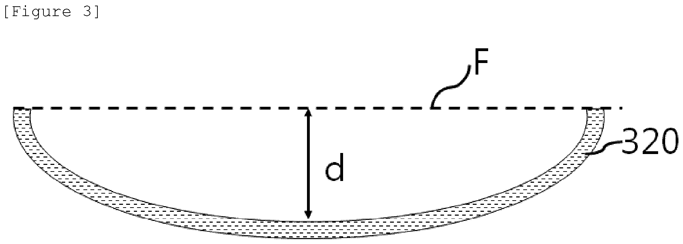

FIG. 3 is a view schematically illustrating measureing the bending distance of the liquid crystal display device according to an exemplary embodiment of the present invention. Specifically, FIG. 3 schematically illustrates the measurement of a bending distance occurring at a side where the second polarizer protection film 320 of a liquid crystal display device locates, and the bending distance of the liquid crystal display device may be calculated by measuring a spaced distance d from a surface F of the second polarizer protection film 320, which is assumed as a horizontal state where bending does not occur in the liquid crystal display device to a portion protruding the most toward a side where the second polarizer protection film 320 of the liquid crystal display device locates where bending occurs. Further, in FIG. 3, for the convenience of description, the illustration of the liquid crystal cell, the first polarizing plate, the second polarizer, the fourth polarizer protection film, and the like was omitted.

According to an exemplary embodiment of the present invention, an amount of change in bending distance of a liquid crystal display after the high humidity test may mean an amount of change in bending distance occurring at a side where the first polarizer protection film of the liquid crystal display device locates after a high humidity test as compared to the bending distance occurring at the side of the first polarizer protection film of the liquid crystal display device before the high humidity test, or an amount of change in bending distance occurring at a side where the second polarizer protection film of the liquid crystal display device locates after a high humidity test as compared to the bending distance occurring at the side of the second polarizer protection film of the liquid crystal display device before the high humidity test.

According to an exemplary embodiment of the present invention, the amount of change in bending distance of the liquid crystal display device may be measured by adopting a method of measuring the bending of a member in the art without limitation. For example, the bending distance of the liquid crystal display device may be measured by using a 3D measuring apparatus (manufactured by DUKIN Co., Ltd.) using a laser, and the amount of change in bending distance of the liquid crystal display device may be calculated through the measured bending distance. Specifically, a surface (first measurement surface) of the first polarizer protection film of the liquid crystal display device is placed to face the 3D measuring apparatus, and the entire surface of the first measurement surface is irradiated by a laser using the 3D measuring apparatus. Thereafter, a time taken for the laser reflected from the first measurement surface to reach a sensor of the 3D measuring apparatus is measured. In this case, through the laser irradiation rate and the measured time, the degree of bending at the side of the first polarizer protection film of the liquid crystal display device may be calculated.

As another method, the two corners protruding the most among the four corners of the surface of the first polarizer protection film of the liquid crystal display device are connected with a string such as a thread, and among vertical distances from the surface of the polarizer protection film where the thread is connected to the connected thread, the longest distance is measured, and may be set as a bending distance.

Further, the liquid crystal display device is placed on a horizontal support, such that the polarizer protection film protruding toward the outer direction of the liquid crystal display device is placed at a lower side from the support, and the length of the most spaced portion among the four corners of the polarizer protection film placed at the lower side from the support is measured, and may be set as a bending distance.

Hereinafter, the present invention will be described in detail with reference to Examples for specifically describing the present invention. However, the Examples according to the present invention may be modified in various forms, and it is not interpreted that the scope of the present invention is limited to the Examples to be described below. The Examples of the present specification are provided for more completely explaining the present invention to the person with ordinary skill in the art.

## Preparation of Polarizer Protection Film

The polarizer protection films shown in the following Table 1 were prepared.

[Table 1]

| | Polarizer protection film | Thickness (μm) | Heat shrinkage stress in transverse direction (N/5 mm) | | | Heat shrinkage stress in machine direction (N/5 mm) | | | Moisture permeability (g/m2·day) |
|---|---|---|---|---|---|---|---|---|---|
| | | | Before heating | After heating | Room temperature after heating | Before heating | After heating | Room temperature after heating | |
| No. 1 | PET film | 80 | 2.63 | 1.51 | 0.31 | 0.89 | -0.01 | 1.30 | 0~10 |
| No. 2 | Cycloolefin-based film | 50 | 0.68 | 0.01 | 0.71 | 1.03 | 0.00 | 1.04 | 10~50 |
| No. 3 | Acrylic film | 60 | 1.46 | 0.02 | 0.67 | 1.00 | 0.02 | 0.70 | 50~200 |
| No. 4 | TAC film | 60 | 2.45 | 1.12 | 0.38 | 0.92 | 0.40 | 0.20 | 200~1000 |
| | | | | | | | | | |
| No. 5 | PET film | 80 | 4.08 | 3.98 | 1.75 | 1.10 | 0.20 | 1.63 | 0~10 |

In Table 1, the PET film is a polyethylene terephthalate film, and the TAC film is a triacetyl cellulose film. In addition, the heat shrinkage stress in the transverse direction or the machine direction after heating in Table 1 means a heat shrinkage stress of the polarizer protection film in the transverse direction or the machine direction after the polarizer protection film is heated in a chamber at 70 °C and 5 RH% for 75 minutes. Furthermore, the heat shrinkage stress in the transverse direction or the machine direction at room temperature after heating in Table 1 means a heat shrinkage stress of the polarizer protection film in the transverse direction or the machine direction after the polarizer protective film is heated in a chamber at 70 °C and 5 RH% for 75 minutes, and then is left to stand at room temperature and room humidity (25 °C and 45 RH%) for 45 minutes.

Furthermore, polarizer protection film no. 1 to polarizer protection film no. 4 are sufficiently heat-stabilized at a temperature which is equal to or more than the glass transition temperature in order to remove the shrinkage strength after the films are biaxially stretched, similarly to the case of a general film, thereby removing the heat shrinkage stress of each of the polarizer protection films in the transverse direction. However, polarizer protection film no. 5 was heat-treated at a temperature which is equal to or less than the glass transition temperature after the polarizer protection film was biaxially stretched, thereby significantly adjusting the heat shrinkage stress in the TD direction.

**Example 1**

A first polarizing plate and a second polarizing plate were manufactured by applying the prepared polarizer protection films as shown in the following Table 2. A polyvinyl alcohol-based polarizer was used for each of the first polarizing plate and the second polarizing plate. Moreover, the first polarizing plate was manufactured, such that the moisture shrinkage direction of the polyvinyl alcohol-based polarizer and the heat shrinkage direction of the first polarizer protection film were orthogonal to each other. In addition, the second polarizing plate was manufactured, such that the moisture shrinkage direction of the polyvinyl alcohol-based polarizer and the heat shrinkage direction of the second polarizer protection film were orthogonal to each other.

Furthermore, the first polarizing plate and the second polarizing plate were attached to both surfaces of a liquid crystal cell in the VA mode, such that the moisture shrinkage direction of the polyvinyl alcohol-based polarizer of the first polarizing plate and the moisture shrinkage direction of the polyvinyl alcohol-based polarizer of the second polarizing plate were orthogonal to each other, thereby manufacturing a liquid crystal display device.

**Examples 2 to 4**

A liquid crystal display device was manufactured in the same manner as in Example 1, except that a first polarizing plate and a second polarizing plate were manufactured by applying the prepared polarizer protection films as shown in the following Table 2.

**Comparative Examples 1 to 5**

A liquid crystal display device was manufactured in the same manner as in Example 1, except that a first polarizing plate and a second polarizing plate were manufactured by applying the prepared polarizer protection films as shown in the following Table 2.

[Table 2]

| | First polarizing plate | | Second polarizing plate | |
|---|---|---|---|---|
| | First polarizer protection film (Outer side surface) | Third polarizer protection film (Inner side surface) | Second polarizer protection film (Outer side surface) | Fourth polarizer protection film (Inner side surface) |
| Example 1 | No. 5 | No. 4 | No. 5 | No. 4 |
| Example 2 | No. 5 | No. 2 | No. 5 | No. 2 |
| Example 3 | No. 5 | - | No. 5 | - |
| Example 4 | No. 5 | - | No. 5 | - |
| Comparative Example 1 | No. 1 | No. 2 | No. 1 | No. 2 |

(continued)

| | First polarizing plate | | Second polarizing plate | |
|---|---|---|---|---|
| | First polarizer protection film (Outer side surface) | Third polarizer protection film (Inner side surface) | Second polarizer protection film (Outer side surface) | Fourth polarizer protection film (Inner side surface) |
| Comparative Example 2 | No. 3 | No. 2 | No. 3 | No. 2 |
| Comparative Example 3 | No. 3 | No. 4 | No. 3 | No. 4 |
| Comparative Example 4 | No. 4 | No. 2 | No. 4 | No. 2 |
| Comparative Example 5 | No. 4 | No. 2 | No. 4 | No. 2 |

**Examples 5 to 8 and Comparative Examples 6 to 11**

A liquid crystal display device was manufactured in the same manner as in Example 1, except that a first polarizer protection film to a fourth polarizer protection film were prepared as follows. In this case, the first polarizer protection film and the second polarizer protection film were provided on the outer side surface (a side opposite to the side of the liquid crystal cell) of the liquid crystal display device, and the third polarizer protection film and the fourth polarizer protection film were provided on an inner side surface (a side where the liquid crystal cell locates) of the liquid crystal display device.

As the first polarizer protection film, a polarizer protection film satisfying physical properties shown in the following Table 3 was prepared.

[Table 3]

| | (a) Heat shrinkage stress in transverse direction (N/5 mm) | (b) Heat shrinkage stress in machine direction (N/5 mm) | (c) Heat shrinkage stress in transverse direction (N/5 mm) |
|---|---|---|---|
| Measurement conditions | 70 °C, 5 RH%, 75 min | 70 °C, 5 RH%, 75 min | 70 °C, 5 RH%, 75 min -> 25 °C, 45 RH%, 45 min |
| Example 5 | 3.98 | 0.02 | 1.75 |
| Example 6 | 3.98 | 0.02 | 2.43 |
| Example 7 | 5.71 | 0.2 | 2.51 |
| Example 8 | 5.71 | 0.2 | 3.48 |
| Comparative Example 6 | 1.91 | 0.1 | 0.84 |
| Comparative Example 7 | 1.91 | 0.1 | 0.44 |
| Comparative Example 8 | 1.91 | 0.1 | 0.44 |
| Comparative Example 9 | 1.91 | 0.1 | 1.17 |
| Comparative Example 10 | 8.21 | 0.29 | 7.55 |
| Comparative Example 11 | 8.21 | 0.29 | 7.55 |

As the second polarizer protection film, a polarizer protection film satisfying physical properties shown in the following Table 4 was prepared.

[Table 4]

| | (a) Heat shrinkage stress in transverse direction (N/5 mm) | (b) Heat shrinkage stress in machine direction (N/5 mm) | (c) Heat shrinkage stress in transverse direction (N/5 mm) |
|---|---|---|---|
| Measurement conditions | 70 °C, 5 RH%, 75 min | 70 °C, 5 RH%, 75 min | 70 °C, 5 RH%, 75 min -> 25 °C, 45 RH%, 45 min |
| Example 5 | 3.98 | 0.02 | 1.75 |
| Example 6 | 5.71 | 0.2 | 2.51 |
| Example 7 | 3.98 | 0.02 | 2.43 |
| Example 8 | 5.71 | 0.2 | 3.48 |
| Comparative Example 6 | 3.98 | 0.02 | 0.92 |
| Comparative Example 7 | 5.71 | 0.2 | 2.51 |
| Comparative Example 8 | 1.91 | 0.1 | 0.44 |
| Comparative Example 9 | 8.21 | 0.29 | 7.55 |
| Comparative Example 10 | 1.91 | 0.1 | 1.17 |
| Comparative Example 11 | 8.21 | 0.29 | 7.55 |

As the third polarizer protection film, a polarizer protection film satisfying physical properties shown in the following Table 5 was prepared.

[Table 5]

| | (a) Heat shrinkage stress in transverse direction (N/5 mm) | (b) Heat shrinkage stress in machine direction (N/5 mm) |
|---|---|---|
| Measurement conditions | 70 °C, 5 RH%, 75 min | 70 °C, 5 RH%, 75 min |
| Example 5 | 0.04 | 0.09 |
| Example 6 | 0.04 | 0.09 |
| Example 7 | 0.57 | 0.09 |
| Example 8 | 0.57 | 0.09 |
| Comparative Example 6 | 0.02 | 0.09 |
| Comparative Example 7 | 0.001 | 0.09 |
| Comparative Example 8 | 0.001 | 0.09 |
| Comparative Example 9 | 0.19 | 0.09 |

(continued)

| | (a) Heat shrinkage stress in transverse direction (N/5 mm) | (b) Heat shrinkage stress in machine direction (N/5 mm) |
|---|---|---|
| Comparative Example 10 | 2.46 | 0.09 |
| Comparative Example 11 | 2.46 | 0.09 |

As the fourth polarizer protection film, a polarizer protection film satisfying physical properties shown in the following Table 6 was prepared.

[Table 6]

| | (a) Heat shrinkage stress in transverse direction (N/5 mm) | (b) Heat shrinkage stress in machine direction (N/5 mm) |
|---|---|---|
| Measurement conditions | 70 °C, 5 RH%, 75 min | 70 °C, 5 RH%, 75 min |
| Example 5 | 0.04 | 0.09 |
| Example 6 | 0.57 | 0.09 |
| Example 7 | 0.04 | 0.09 |
| Example 8 | 0.57 | 0.09 |
| Comparative Example 6 | 0.002 | 0.09 |
| Comparative Example 7 | 0.05 | 0.09 |
| Comparative Example 8 | 0.001 | 0.09 |
| Comparative Example 9 | 2.46 | 0.09 |
| Comparative Example 10 | 0.19 | 0.09 |
| Comparative Example 11 | 2.46 | 0.09 |

In Tables 3 to 6, "(a) Heat shrinkage stress in transverse direction" means a heat shrinkage stress of the polarizer protection film in the transverse direction after the polarizer protection film is heated in a chamber at 70 °C and 5 RH% for 75 minutes, and "(b) Heat shrinkage stress in machine direction" means a heat shrinkage stress of the polarizer protection film in the machine direction after the polarizer protection film is heated in a chamber at 70 °C and 5 RH% for 75 minutes. Further, in Tables 3 and 4, "(c) Heat shrinkage stress in transverse direction" means a heat shrinkage stress of the polarizer protection film in the transverse direction after the polarizer protection film is heated in a chamber at 70 °C and 5 RH% for 75 minutes, and then is left to stand at 25 °C and 45 RH% for 45 minutes.

In addition, in Tables 3 and 4, for "(c) Heat shrinkage stress in transverse direction", a slight difference among the values thereof occurred according to the amount of change in temperature over time in a process in which the polarizer protection film is heated, and then is cooled down to room temperature.

In Examples 5 to 8 and Comparative Examples 6 to 11, (d) the difference between the heat shrinkage stress of the first polarizer protection film in the transverse direction and the heat shrinkage stress of the first polarizer protection film in the machine direction, (e) the ratio of the heat shrinkage stress of the first polarizer protection film after being heated to the heat shrinkage stress of the first polarizer protection film after being left to stand at room temperature, and (f) the ratio of the heat shrinkage stress of the first polarizer protection film to the heat shrinkage stress of the third polarizer protection film were shown in the following Table 7.

[Table 7]

| | (d) Difference between heat shrinkage stress in transverse direction and heat shrinkage stress in machine direction (N/5 mm) | (e) Ratio of heat shrinkage stress of the first polarizer protection film after being heated to heat shrinkage stress of the first polarizer protection film after being left to stand at room temperature | (f) Ratio of heat shrinkage stress of the first polarizer protection film to heat shrinkage stress of the third polarizer protection film |
|---|---|---|---|
| Measurement conditions | 70 °C, 5 RH%, 75 min | 70 °C, 5 RH%, 75 min -> 25 °C, 45 RH%, 45 min | 70 °C, 5 RH%, 75 min |
| Example 5 | 3.96 | 1:0.44 | 1:0.0090 |
| Example 6 | 3.96 | 1:0.61 | 1:0.0090 |
| Example 7 | 5.51 | 1:0.44 | 1:0.1000 |
| Example 8 | 5.51 | 1:0.61 | 1:0.1000 |
| Comparative Example 6 | 1.81 | 1:0.44 | 1:0.0090 |
| Comparative Example 7 | 1.81 | 1:0.23 | 1:0.0005 |
| Comparative Example 8 | 1.81 | 1:0.23 | 1:0.0005 |
| Comparative Example 9 | 1.81 | 1:0.61 | 1:0.1000 |
| Comparative Example 10 | 7.92 | 1:0.92 | 1:0.3000 |
| Comparative Example 11 | 7.92 | 1:0.92 | 1:0.3000 |

In Examples 5 to 8 and Comparative Examples 6 to 11, (d) the difference between the heat shrinkage stress of the second polarizer protection film in the transverse direction and the heat shrinkage stress of the second polarizer protection film in the machine direction, (e) the ratio of the heat shrinkage stress of the second polarizer protection film after being heated to the heat shrinkage stress of the second polarizer protection film after being left to stand at room temperature, and (f) the ratio of the heat shrinkage stress of the second polarizer protection film to the heat shrinkage stress of the fourth polarizer protection film were shown in the following Table 8.

[Table 8]

| | (d) Difference between heat shrinkage stress in transverse direction and heat shrinkage stress in machine direction (N/5 mm) | (e) Ratio of heat shrinkage stress of the second polarizer protection film after being heated to heat shrinkage stress of the second polarizer protection film after being left to stand at room temperature | (f) Ratio of heat shrinkage stress of the second polarizer protection film to heat shrinkage stress of the fourth polarizer protection film |
|---|---|---|---|
| Measurement conditions | 70 °C, 5 RH%, 75 min | 70 °C, 5 RH%, 75 min -> 25 °C, 45 RH%, 45 min | 70 °C, 5 RH%, 75 min |
| Example 5 | 3.96 | 1:0.44 | 1:0.0090 |
| Example 6 | 5.51 | 1:0.44 | 1:0.1000 |
| Example 7 | 3.96 | 1:0.61 | 1:0.0090 |
| Example 8 | 5.51 | 1:0.61 | 1:0.1000 |
| Comparative Example 6 | 3.96 | 1:0.23 | 1:0.0005 |

(continued)

| Comparative Example 7 | 5.51 | 1:0.44 | 1:0.0090 |
|---|---|---|---|
| Comparative Example 8 | 1.81 | 1:0.23 | 1:0.0005 |
| Comparative Example 9 | 7.92 | 1:0.92 | 1:0.3000 |
| Comparative Example 10 | 1.81 | 1:0.61 | 1:0.1000 |
| Comparative Example 11 | 7.92 | 1:0.92 | 1:0.3000 |

In Tables 7 and 8, "(d) Difference between heat shrinkage stress in transverse direction and heat shrinkage stress in machine direction" means a difference between the heat shrinkage stress of the first or second polarizer protection film in the transverse direction and the heat shrinkage stress of the first or second polarizer protection film in the machine direction, after the first or second polarizer protection film is heated in a chamber at 70 °C and 5 RH% for 75 minutes. Further, "(e) Ratio of heat shrinkage stress of the first or second polarizer protection film after being heated to heat shrinkage stress of the first or second polarizer protection film after being left to stand at room temperature" means a ratio of the heat shrinkage stress of the first or second polarizer protection film in the transverse direction after being heated under the conditions of 70 °C and 5 RH% for 75 minutes to the heat shrinkage stress of the first or second polarizer protection film in the transverse direction after being heated under the conditions of 70 °C and 5 RH% for 75 minutes and left to stand under the conditions of 25 °C and 45 RH% for 45 minutes.

In addition, in Table 7, "(f) Ratio of heat shrinkage stress of the first polarizer protection film to the heat shrinkage stress of the third polarizer protection film" means a ratio of the heat shrinkage stress of the first polarizer protection film in the transverse direction to the heat shrinkage stress of the third polarizer protection film in the transverse direction, after the first polarizer protection film and the third polarizer protection film are heated in a chamber at 70 °C and 5 RH% for 75 minutes, and in Table 8, "(f) Ratio of heat shrinkage stress of the second polarizer protection film to heat shrinkage stress of the fourth polarizer protection film" means a ratio of the heat shrinkage stress of the second polarizer protection film in the transverse direction to the heat shrinkage stress of the fourth polarizer protection film in the transverse direction, after the second polarizer protection film and the fourth polarizer protection film are heated in a chamber at 70 °C and 5 RH% for 75 minutes.

**[Experimental Example 1]** - **High Humidity Test**

For the high humidity tests of the liquid crystal display devices according to Examples 1 to 8 and Comparative Examples 1 to 11, the bending distance of the liquid crystal display device was measured by using a method using the above-described 3D measuring apparatus (manufactured by DUKIN Co., Ltd.). Specifically, by using the 3D measuring apparatus, the bending distance d of the second polarizer protection film 320 of the liquid crystal display device before a high humidity test was measured, and the bending distance d of the second polarizer protection film 320 was measured after the high humidity test was carried out, thereby calculating an amount of change in bending distance after the high humidity test as compared to the initial bending distance, as illustrated in FIG. 3.

For the high humidity test, after the second polarizer protection film was left to stand in a chamber at 20 °C and 90 RH% for 165 hours, the second polarizer protection film was taken out of the chamber, and then a method of leaving the second polarizer protection film to stand at room temperature and room humidity (20 °C and 45 RH%) for 24 hours was used.

The following Table 9 shows the high humidity test results according to Experimental Example 1. In the following Table 9, the amount of change as compared to the initial value is shown as an absolute value.

[Table 9]

| | Initial bending distance (mm) | Bending distance after high humidity test (mm) | Amount of change as compared to the initial value (mm) |
|---|---|---|---|
| Example 1 | -0.84 | -0.78 | 0.06 |
| Example 2 | -0.91 | -0.70 | 0.21 |

(continued)

|  | Initial bending distance (mm) | Bending distance after high humidity test (mm) | Amount of change as compared to the initial value (mm) |
|---|---|---|---|
| Example 3 | 0.51 | 0.54 | 0.03 |
| Example 4 | 0.66 | 0.71 | 0.05 |
| Example 5 | 0.49 | 0.64 | 0.15 |
| Example 6 | 0.84 | 1.01 | 0.17 |
| Example 7 | 0.34 | 0.49 | 0.15 |
| Example 8 | 0.84 | 1.04 | 0.2 |
| Comparative Example 1 | -0.90 | 0.53 | 1.43 |
| Comparative Example 2 | -0.61 | 2.14 | 2.74 |
| Comparative Example 3 | -0.61 | 3.25 | 3.86 |
| Comparative Example 4 | -0.22 | 3.79 | 4.01 |
| Comparative Example 5 | -0.70 | 4.15 | 4.86 |
| Comparative Example 6 | 0.19 | 3.70 | 3.51 |
| Comparative Example 7 | 0.00 | 3.64 | 3.64 |
| Comparative Example 8 | 0.36 | 4.47 | 4.11 |
| Comparative Example 9 | 0.65 | 4.55 | 3.9 |
| Comparative Example 10 | 0.22 | 3.03 | 2.81 |
| Comparative Example 11 | 0.24 | 3.23 | 2.99 |

**[Experimental Example 2]** - **High Temperature Test**

For the high temperature tests of the liquid crystal display devices according to Examples 1 to 8 and Comparative Examples 1 to 11, the bending distance of the liquid crystal display device was measured by using a method using the above-described 3D measuring apparatus (manufactured by DUKIN Co., Ltd.). Specifically, by using the 3D measuring apparatus, the bending distance d of the second polarizer protection film 320 of the liquid crystal display device before a high temperature test was measured, and the bending distance d of the second polarizer protection film 320 was measured after the high temperature test was carried out, thereby calculating an amount of change in bending distance after the high temperature test as compared to the initial bending distance, as illustrated in FIG. 3.

For the high temperature test, after the second polarizer protection film was left to stand in a chamber at 70 °C and 5 RH% for 168 hours, the second polarizer protection film was taken out of the chamber, and then a method of leaving the polarizer protection film to stand at room temperature and room humidity (20 °C and 45 RH%) for 24 hours was used.

The following Table 10 shows the high temperature test results according to Experimental Example 2. In the following Table 10, the amounts of changes as compared to the initial values are shown as absolute values.

[Table 10]

|  | Initial bending distance (mm) | Bending distance after high temperature test (mm) | Amount of change as compared to the initial value (mm) |
|---|---|---|---|
| Example 1 | 0.88 | 0.44 | 0.44 |
| Example 2 | 1.20 | 0.65 | 0.55 |
| Example 3 | 0.62 | 0.64 | 0.02 |
| Example 4 | 0.71 | 0.76 | 0.05 |
| Example 5 | 0.30 | 0.52 | 0.22 |
| Example 6 | 0.62 | 0.85 | 0.23 |
| Example 7 | 0.91 | 1.22 | 0.31 |
| Example 8 | 0.79 | 1.08 | 0.29 |
| Comparative Example 1 | 0.74 | 1.51 | 0.77 |
| Comparative Example 2 | 0.61 | 3.13 | 2.51 |
| Comparative Example 3 | 0.89 | 3.15 | 2.26 |
| Comparative Example 4 | 1.03 | 6.00 | 4.97 |
| Comparative Example 5 | 0.96 | 6.60 | 5.64 |
| Comparative Example 6 | 0.90 | 4.02 | 3.12 |
| Comparative Example 7 | 0.65 | 3.54 | 2.89 |
| Comparative Example 8 | 0.29 | 4.61 | 4.32 |
| Comparative Example 9 | 0.70 | 5.15 | 4.45 |
| Comparative Example 10 | 0.91 | 5.55 | 4.64 |
| Comparative Example 11 | 0.34 | 3.13 | 2.79 |

In the case of the amounts of bending in Experimental Example 1 and Experimental Example 2, the bending direction toward the direction of the first polarizing plate is shown as a positive value, and the bending direction toward the direction of the second polarizing plate is shown as a negative value. Furthermore, in the case of Tables 9 and 10, the initial bending amounts are different from each other due to factors such as compression strength in a process of manufacturing a liquid crystal display device, and the initial bending amount may be a reference for deriving the high humidity test and high temperature test results.

As can be seen from the high humidity test results in Experimental Example 1 shown in Table 9, it can be confirmed that the changes in bending amount of the liquid crystal display devices according to the Examples are remarkably smaller than those of the liquid crystal display devices according to the Comparative Examples. This may be a result of preventing the polyvinyl alcohol-based polarizer from being deformed by excellent moisture permeability resistance of the first polarizer protection film and the second polarizer protection film located at the outermost portion of the liquid crystal display device.

As can be seen from the high temperature test results in Experimental Example 2, it can be seen that the changes in bending amount of the liquid crystal display devices according to the Examples are remarkably smaller than those of the liquid crystal display devices according to the Comparative Examples. This may be a result of compensating for the bending of the polyvinyl alcohol-based polarizer of the first polarizing plate which shrinks due to the loss of moisture under the high temperature conditions with the heat shrinkage of the second polarizer protection film of the second polarizing plate, and compensating the bending of the polyvinyl alcohol-based polarizer of the second polarizing plate which shrinks due to the loss of moisture under the high temperature conditions with the heat shrinkage of the first polarizer protection film of the first polarizing plate.

Further, it was confirmed that in the liquid crystal display devices in Examples 1 to 8, in which the first and second polarizer protection films having the heat shrinkage stress of 2.5 N/5 mm or more and 8 N/5 mm or less after being heated under the conditions of 70 °C and 0 RH% or more and 20 RH% or less for 75 minutes were provided at the outermost portion of the liquid crystal display device, the bending was suppressed even after the high humidity test and the high temperature test. On the contrary, it was confirmed that in the liquid crystal display devices in Comparative Examples 1 to 11, in which the first and second polarizer protection films having the heat shrinkage stress out of a range of 2.5 N/5 mm or more and 8 N/5 mm or less after being heated under the conditions of 70 °C and 0 RH% or more and 20 RH% or less for 75 minutes were provided at the outermost portion of the liquid crystal display device, effects of suppressing the bending after the high humidity test and the high temperature test were inferior to those in the Examples.

Furthermore, it was confirmed that in the liquid crystal display devices in Examples 1 to 8, in which the first and second polarizer protection films satisfying a difference between the heat shrinkage stress in the transverse direction and the heat shrinkage stress in the machine direction, which was 2 N/5 mm or more and 7 N/5 mm or less, were provided at the outermost portion of the liquid crystal display device, the bending was suppressed even after the high humidity test and the high temperature test. In addition, it was confirmed that in the liquid crystal display devices in Examples 1 to 8, in which the first and second polarizer protection films satisfying a ratio of the heat shrinkage stress of the first and second polarizer protection films after being heated under the conditions of 70 °C and 0 RH% or more and 20 RH% or less for 75 minutes to the heat shrinkage stress of the first and second polarizer protection films after being heated under the conditions of 70 °C and 0 RH% or more and 20 RH% or less for 75 minutes and left to stand under the conditions of 25 °C and 40 RH% or more and 50 RH% or less for 45 minutes, which was 1:0.3 to 1:0.8, were provided at the outermost portion of the liquid crystal display device, the bending was suppressed even after the high humidity test and the high temperature test.

Further, it was confirmed that in the liquid crystal display devices in Examples 1 to 8, in which a ratio of the heat shrinkage stress of the first polarizer protection film to the heat shrinkage stress of the third polarizer protection film after the first and third polarizer protection films were heated under the conditions of 70 °C and 0 RH% or more and 20 RH% or less for 75 minutes, and a ratio of the heat shrinkage stress of the second polarizer protection film to the heat shrinkage stress of the fourth polarizer protection film after the second and fourth polarizer protection films were heated under the conditions of 70 °C and 0 RH% or more and 20 RH% or less for 75 minutes satisfied 1:0.001 to 1:0.2, the bending was suppressed even after the high humidity test and the high temperature test.

Therefore, it can be seen that when applied to a liquid crystal display device, the polarizing plate according to an exemplary embodiment of the present invention may minimize the bending which reversibly varies when the liquid crystal display device is recovered from an environment of high temperature and/or high humidity to a use environment of room temperature and room humidity.

[Explanation of Reference Numerals and Symbols]

    10: Polarizing plate
    11: Polarizer
    12: Polarizer protection film
    13: Additional polarizer protection film
    100: Liquid crystal cell
    200: First polarizing plate
    210: First polarizer
    220: First polarizer protection film
    230: Third polarizer protection film
    300: Second polarizing plate
    310: Second polarizer
    320: Second polarizer protection film
    330: Fourth polarizer protection film

**Claims**

1. A polarizing plate (10; 200, 300) comprising:

 a polarizer (11; 210, 310); and
 a polarizer protection film (12; 220, 320) provided on one surface of the polarizer,
 wherein the polarizer protection film (12; 220, 320) is a biaxially stretched and then heat-treated film heat-treated at a temperature equal to or less than the glass transition temperature such as tc have a heat shrinkage stress of 2.5 N/5 mm or more and 8 N/5 mm or less in a transverse direction orthogonal to the machine direction of the polarizer protection film (12; 202; 320) when measured after being heated under the conditions of 70 °C and a humidity of 0 %RH or more and 20 %RH or less for 75 minutes.

2. The polarizing plate of claim 1, wherein a difference between a transverse direction heat shrinkage stress of the polarizer protection film (12; 220, 320) and a machine direction heat shrinkage stress of the polarizer protection film (12; 220,320) is 2 N/5 mm or more and 7 N/5 mm or less.

3. The polarizing plate of claim 1, wherein a ratio of a heat shrinkage stress of the polarizer protection film (12; 220, 320) after being heated under the conditions of 70 °C and 0 %RH or more and 20 %RH or less for 75 minutes to a heat shrinkage stress of the polarizer protection film (12; 220, 320) after being heated under the conditions of 70 °C and 0 %RH or more and 20 %RH or less for 75 minutes and left to stand under the conditions of 25 °C and 40 %RH or more and 50 %RH or less for 45 minutes is 1:0.3 to 1:0.8.

4. The polarizing plate of claim 1, further comprising: an additional polarizer protection film (13; 230,330) provided on the other surface of the polarizer (11; 210; 310) ,
 wherein a heat shrinkage stress of the polarizer protection film (12; 220, 320) is larger than that of the additional polarizer protection film (13; 230,330).

5. The polarizing plate of claim 4, wherein after the polarizer protection film (12; 220, 320) is heated under the conditions of 70 °C and 0 %RH or more and 20 %RH or less for 75 minutes, a ratio of the heat shrinkage stress of the polarizer protection film (12; 220, 320) to the heat shrinkage stress of the additional polarizer protection film (13; 230, 330) is 1:0.001 to 1:0.2.

6. The polarizing plate of claim 1, wherein the polarizer protection film (12; 220, 320) has a moisture permeability of 0.001 g/m$^2$•day or more and 1,000 g/m$^2$•day or less.

7. The polarizing plate of claim 1, wherein the polarizer protection film (12; 220, 320) has a Re value of 1,000 nm or less, or 5,000 nm or more.

8. The polarizing plate of claim 1, wherein the polarizer protection film (12; 220, 320) is any one of a polyethylene-based film having a Re value of 5,000 nm or more, a polyethylene-based film having a Re value of 1,000 nm or less, an acrylic film having a Re value of 1,000 nm or less, and a cycloolefin-based film having a Re value of 1,000 nm or less.

9. A liquid crystal display device comprising:

 a liquid crystal cell (100);
 a first polarizing plate (200) provided on one surface of the liquid crystal cell (100); and
 a second polarizing plate (300) provided on the other surface of the liquid crystal cell (100),
 wherein the first polarizing plate (200) comprises a first polarizer (210) and a first polarizer protection film (220) provided on one surface of the first polarizer (210) ;
 the second polarizing plate (300) comprises a second polarizer (310) and a second polarizer protection film (320) provided on one surface of the second polarizer (310) ;
 the first polarizer protection film (220) and the second polarizer protection film (320) are provided on sides opposite to a side where the liquid crystal cell (100) locates,
 moisture shrinkage directions of the first polarizer (210) and the second polarizer (310) are orthogonal to each other,
 a heat shrinkage direction of the first polarizer protection film (220) is orthogonal to a moisture shrinkage direction of the first polarizer (210),

a heat shrinkage direction of the second polarizer protection film (320) is orthogonal to a moisture shrinkage direction of the second polarizer (310), and

the first polarizer protection film (220) and the second polarizer protection film (320) are each biaxially stretched and then heat-treated films heat-treated at a temperature equal to or below a respective glass transition temperature such to have a heat shrinkage stress of 2.5 N/5 mm or more and 8 N/5 mm or less in a transverse direction orthogonal to the machine direction of the polarizer protection film (12; 202;

when measured after being heated under the conditions of 70 °C and 0 %RH or more and 20 %RH or less for 75 minutes.

10. The liquid crystal display device of claim 9, wherein the first polarizer protection film (220) and the second polarizer protection film (320) each have a moisture permeability of 0.001 $g/m^2 \cdot day$ or more and 1,000 $g/m^2 \cdot day$ or less.

11. The liquid crystal display device of claim 9, wherein the first polarizing plate (200) further comprises a third polarizer protection film (230) provided on the side where the liquid crystal cell (100) locates,

the second polarizing plate (300) further comprises a fourth polarizer protection film (330) provided on the side where the liquid crystal cell (100) locates,
a heat shrinkage stress of the first polarizer protection film (220) is larger than that of the third polarizer protection film (230), and
a heat shrinkage stress of the second polarizer protection film (320) is larger than that of the fourth polarizer protection film (330).

12. The liquid crystal display device of claim 9, wherein the first polarizer protection film (220) is a polyethylene-based film having a Re value of 5,000 nm or more, and

the second polarizer protection film (320) is a polyethylene-based film having a Re value of 5,000 nm or more, an acrylic film having a Re value of 1,000 nm or less, a polyethylene-based film having a Re value of 1,000 nm or less, or a cycloolefin-based film having a Re value of 1,000 nm or less.

13. The liquid crystal display device of claim 9, wherein the liquid crystal cell (100) is a liquid crystal cell in which a liquid crystal layer is provided between two transparent substrates having a thickness of 0.2 mm or more and 1.0 mm or less.

14. The liquid crystal display device of claim 9, wherein after a high humidity test is performed by being left to stand in a chamber at 20 °C and 90 %RH for 165 hours, an amount of change in bending distance of the liquid crystal display device is 1.0 mm or less, as compared to the initial bending distance.

15. The liquid crystal display device of claim 9, wherein after a high temperature test is performed by being left to stand in a chamber under the conditions of 70 °C and 0 %RH or more and 20 %RH or less for 168 hours, an amount of change in bending distance of the liquid crystal display device is 0.7 mm or less, as compared to the initial bending distance.

**Patentansprüche**

1. Polarisationsplatte (10; 200, 300), umfassend:

einen Polarisator (11; 210, 310); und
einen Polarisatorschutzfilm (12; 220, 320), der auf einer Oberfläche des Polarisators bereitgestellt ist,
wobei der Polarisatorschutzfilm (12; 220, 320) ein biaxial gestreckter und dann wärmebehandelter Film ist, der bei einer Temperatur gleich oder kleiner als die Glasübergangstemperatur wärmebehandelt wird, sodass er eine Wärmeschrumpfungsspannung von 2,5 N/5 mm oder mehr und 8 N/5 mm oder weniger in Querrichtung orthogonal zur Maschinenrichtung des Polarisatorschutzfilms (12; 202; 320) aufweist, gemessen nach Erwärmung unter den Bedingungen von 70 °C und einer Feuchtigkeit von 0 % RH oder mehr und 20 % RH oder weniger für 75 Minuten.

2. Polarisationsplatte nach Anspruch 1, wobei eine Differenz zwischen einer Wärmeschrumpfspannung in Querrichtung des Polarisatorschutzfilms (12; 220, 320) und einer Wärmeschrumpfspannung in Maschinenrichtung des Polarisatorschutzfilms (12; 220, 320) 2 N/5 mm oder mehr und 7 N/5 mm oder weniger beträgt.

3. Polarisationsplatte nach Anspruch 1, wobei ein Verhältnis einer Wärmeschrumpfungsspannung des Polarisatorschutzfilms (12; 220, 320) nach Erwärmen unter den Bedingungen von 70 °C und o % RH oder mehr und 20 % RH oder weniger für 75 Minuten zu einer Wärmeschrumpfungsspannung des Polarisatorschutzfilms (12; 220, 320) nach Erwärmen unter den Bedingungen von 70 °C und 0 % RH oder mehr und 20 % RH oder weniger für 75 Minuten und Stehenlassen unter Bedingungen von 25 °C und 40 % RH oder mehr und 50 % RH oder weniger für 45 Minuten 1:0,3 bis 1:0,8 beträgt.

4. Polarisationsplatte nach Anspruch 1, weiter umfassend: einen zusätzlichen Polarisatorschutzfilm (13; 230, 330), der auf der anderen Oberfläche des Polarisators (11; 210; 310) bereitgestellt ist
wobei eine Wärmeschrumpfspannung des Polarisatorschutzfilms (12; 220, 320) größer ist als die des zusätzlichen Polarisatorschutzfilms (13; 230, 330).

5. Polarisationsplatte nach Anspruch 4, wobei, nachdem der Polarisatorschutzfilm (12; 220, 320) unter den Bedingungen von 70 °C und 0 % RH oder mehr und 20 % RH oder weniger für 75 Minuten erwärmt wird, ein Verhältnis der Wärmeschrumpfspannung des Polarisatorschutzfilms (12; 220, 320) zur Wärmeschrumpfspannung des zusätzlichen Polarisatorschutzfilms (13; 230, 330) 1:0,001 bis 1:0,2 beträgt.

6. Polarisationsplatte nach Anspruch 1, wobei der Polarisatorschutzfilm (12; 220, 320) eine Feuchtigkeitsdurchlässigkeit von 0,001 $g/m^2$*Tag oder mehr und 1.000 $g/m^2$*Tag oder weniger aufweist.

7. Polarisationsplatte nach Anspruch 1, wobei der Polarisatorschutzfilm (12; 220, 320) einen Re-Wert von 1.000 nm oder weniger oder 5.000 nm oder mehr aufweist.

8. Polarisationsplatte nach Anspruch 1, wobei der Polarisatorschutzfilm (12; 220, 320) einer von einem Film auf Polyethylenbasis mit einem Re-Wert von 5.000 nm oder mehr oder einem Film auf Polyethylenbasis mit einem Re-Wert von 1.000 nm oder weniger, einem Acrylfilm mit einem Re-Wert von 1.000 nm oder weniger und einem Film auf Cycloolefinbasis mit einem Re-Wert von 1.000 nm oder weniger ist.

9. Flüssigkristallanzeigevorrichtung, umfassend:

eine Flüssigkristallzelle (100);
eine erste Polarisationsplatte (200), die auf einer Oberfläche der Flüssigkristallzelle (100) bereitgestellt ist; und
eine zweite Polarisationsplatte (300), die auf der anderen Oberfläche der Flüssigkristallzelle (100) bereitgestellt ist,
wobei die erste Polarisationsplatte (200) einen ersten Polarisator (210) und einen ersten Polarisatorschutzfilm (220) aufweist, der auf einer Oberfläche des ersten Polarisators (210) bereitgestellt ist;
die zweite Polarisationsplatte (300) einen zweiten Polarisator (310) und einen zweiten Polarisatorschutzfilm (320) umfasst, der auf einer Oberfläche des zweiten Polarisators (310) bereitgestellt ist;
der erste Polarisatorschutzfilm (220) und der zweite Polarisatorschutzfilm (320) auf Seiten bereitgestellt sind, die einer Seite gegenüberliegen, auf der sich die Flüssigkristallzelle (100) befindet,
Feuchtigkeitsschrumpfungsrichtungen des ersten Polarisators (210) und des zweiten Polarisators (310) orthogonal zueinander sind,
eine Wärmeschrumpfungsrichtung des ersten Polarisatorschutzfilms (220) orthogonal zu einer Feuchtigkeitsschrumpfungsrichtung des ersten Polarisators (210) ist,
eine Wärmeschrumpfungsrichtung des zweiten Polarisatorschutzfilms (320) orthogonal zu einer Feuchtigkeitsschrumpfungsrichtung des zweiten Polarisators (310) ist, und
der erste Polarisatorschutzfilm (220) und der zweite Polarisatorschutzfilm (320) jeweils biaxial gestreckt und dann wärmebehandelte Filme bei einer Temperatur gleich oder unterhalb einer jeweiligen Glasübergangstemperatur wärmebehandelt werden, sodass er eine Wärmeschrumpfungsspannung von 2,5 N/5 mm oder mehr und 8 N/5 mm oder weniger in einer Querrichtung senkrecht zur Maschinenrichtung des Polarisatorschutzfilms (12; 202;
aufweist, gemessen nach Erwärmung unter Bedingungen von 70 °C und o % RH oder mehr und 20 % RH oder weniger für 75 Minuten.

10. Flüssigkristallanzeigevorrichtung nach Anspruch 9, wobei der erste Polarisatorschutzfilm (220) und der zweite Polarisatorschutzfilm (320) jeweils eine Feuchtigkeitsdurchlässigkeit von 0,001 $g/m^2$*Tag oder mehr und 1.000 $g/m^2$*Tag oder weniger aufweisen.

**11.** Flüssigkristallanzeigevorrichtung nach Anspruch 9, wobei die erste Polarisationsplatte (200) weiter einen dritten Polarisatorschutzfilm (230) umfasst, der auf der Seite bereitgestellt ist, auf der sich die Flüssigkristallzelle (100) befindet,

die zweite Polarisationsplatte (300) weiter einen vierten Polarisatorschutzfilm (330) umfasst, der auf der Seite bereitgestellt ist, auf der sich die Flüssigkristallzelle (100) befindet,
eine Wärmeschrumpfungsspannung des ersten Polarisatorschutzfilms (220) größer ist als die des dritten Polarisatorschutzfilms (230), und
eine Wärmeschrumpfungsspannung des zweiten Polarisatorschutzfilms (320) größer ist als die des vierten Polarisatorschutzfilms (330).

**12.** Flüssigkristallanzeigevorrichtung nach Anspruch 9, wobei der erste Polarisatorschutzfilm (220} ein Film auf Polyethylenbasis mit einem Re-Wert von 5.000 nm oder mehr ist, und
der zweite Polarisatorschutzfilm (320) ein Film auf Polyethylenbasis mit einem Re-Wert von 5.000 nm oder mehr, ein Acrylfilm mit einem Re-Wert von 1.000 nm oder weniger, ein Film auf Polyethylenbasis mit einem Re-Wert von 1.000 nm oder weniger oder ein Film auf Cycloolefinbasis mit einem Re-Wert von 1.000 nm oder weniger ist.

**13.** Flüssigkristallanzeigevorrichtung nach Anspruch 9, wobei die Flüssigkristallzelle (100) eine Flüssigkristallzelle ist, in der eine Flüssigkristallschicht zwischen zwei transparenten Substraten mit einer Dicke von 0,2 mm oder mehr und 1,0 mm oder weniger bereitgestellt ist.

**14.** Flüssigkristall-Anzeigevorrichtung nach Anspruch 9, wobei nach Durchführen einer Hochfeuchtigkeitsprüfung durch Stehenlassen in einer Kammer bei 20 °C und 90 % relativer Luftfeuchtigkeit für 165 Stunden ein Änderungsbetrag des Biegeabstands der Flüssigkristallanzeigevorrichtung verglichen mit dem anfänglichen Biegeabstand 1,0 mm oder weniger beträgt.

**15.** Flüssigkristallanzeigevorrichtung nach Anspruch 9, wobei nach Durchführen einer Hochtemperaturprüfung durch Stehenlassen in einer Kammer unter den Bedingungen von 70 °C und 0 % RH oder mehr und 20 % RH oder weniger für 168 Stunden der Änderungsbetrag des Biegeabstands der Flüssigkristallanzeigevorrichtung verglichen mit dem anfänglichen Biegeabstand 0,7 mm oder weniger beträgt.

**Revendications**

**1.** Plaque polarisante (10 ; 200, 300) comprenant :

un polariseur (11 ; 210, 310) ; et
un film de protection de polariseur (12 ; 220, 320) prévu sur une surface du polariseur,
dans laquelle le film de protection de polariseur (12 ; 220, 320) est un film étiré biaxialement puis traité thermiquement, qui est traité thermiquement à une température égale ou inférieure à la température de transition vitreuse telle que tc, présente une contrainte de contraction thermique de 2,5 N/5 mm ou plus et 8 N/5 mm ou moins dans une direction transversale orthogonale à la direction de machine du film de protection de polariseur (12 ; 202 ; 320) lorsqu'elle est mesurée après avoir été chauffé dans des conditions de 70°C et d'une humidité de 0 % de HR ou plus et de 20 % de HR ou moins pendant 75 minutes.

**2.** Plaque polarisante selon la revendication 1, dans laquelle une différence entre une contrainte de contraction thermique dans la direction transversale du film de protection de polariseur (12 ; 220, 320) et une contrainte de contraction thermique dans la direction de machine du film de protection de polariseur (12 ; 220, 320) est de 2 N/ 5 mm ou plus et 7 N/5 mm ou moins.

**3.** Plaque polarisante selon la revendication 1, dans laquelle un rapport d'une contrainte de contraction thermique du film de protection de polariseur (12 ; 220, 320) après avoir été chauffé dans des conditions de 70°C et 0 % de HR ou plus et 20 % de HR ou moins pendant75 minutes à une contrainte de contraction thermique du film de protection de polariseur (12 ; 220, 320) après avoir été chauffé dans des conditions de 70°C et de 0% de HR ou plus et 20% de HR ou moins pendant 75 minutes et laissé à reposer sous le conditions de 25 °C et de 40 % de HR ou plus et 50 % de HR ou moins pendant 45 minutes est de 1:0,3 à 1:0,8.

**4.** Plaque polarisante selon la revendication 1, comprenant en outre : un film de protection de polariseur supplémentaire (13 ; 230, 330) prévu sur l'autre surface du polariseur (11 ; 210 ; 310),
dans laquelle une contrainte de contraction thermique du film de protection de polariseur (12; 220, 320) est supérieure à celle du film de protection de polariseur supplémentaire (13 ; 230, 330).

5. Plaque polarisante selon la revendication 4, dans laquelle après que le film de protection de polariseur (12 ; 220, 320) a été chauffé dans des conditions de 70°C et de 0 % de HR ou plus et 20 % de HR ou moins pendant 75 minutes, un rapport de la contrainte de contraction thermique du film de protection de polariseur (12; 220, 320) à la contrainte de contraction thermique du film de protection de polariseur supplémentaire (13 ; 230, 330) est de 1:0,001 à 1:0,2.

6. Plaque polarisante selon la revendication 1, dans laquelle le film de protection de polariseur (12 ; 220, 320) présente une perméabilité à l'humidité de 0,001 $g/m^2$*jour ou plus et de 1 000 $g/m^2$*jour ou moins.

7. Plaque polarisante selon la revendication 1, dans laquelle le film de protection de polariseur (12 ; 220, 320) présente une valeur de Re de 1 000 nm ou moins, ou de 5 000 nm ou plus.

8. Plaque polarisante selon la revendication 1, dans laquelle le film de protection de polariseur (12; 220, 320) est un quelconque parmi un film à base de polyéthylène présentant une valeur de Re de 5 000 nm ou plus, un film à base de polyéthylène présentant une valeur de Re de 1000 nm ou moins, un film acrylique présentant une valeur de Re de 1000 nm ou moins, et un film à base de cyclooléfine présentant une valeur de Re de 1 000 nm ou moins.

9. Dispositif d'affichage à cristaux liquides comprenant :

   une cellule à cristaux liquides (100) ;
   une première plaque polarisante (200) prévue sur une surface de la cellule à cristaux liquides (100) ; et
   une seconde plaque polarisante (300) prévue sur l'autre surface de la cellule à cristaux liquides (100),
   dans lequel la première plaque polarisante (200) comprend un premier polariseur (210) et un premier film de protection de polariseur (220) prévu sur une surface du premier polariseur (210) ;
   la seconde plaque polarisante (300) comprend un second polariseur (310) et un deuxième film de protection de polariseur (320) prévu sur une surface du second polariseur (310) ;
   le premier film de protection de polariseur (220) et le deuxième film de protection de polariseur (320) sont prévus sur des côtés opposés à un côté où la cellule à cristaux liquides (100) se situe,
   les directions de contraction à l'humidité du premier polariseur (210) et du second polariseur (310) sont orthogonales l'une à l'autre,
   une direction de contraction à la chaleur du premier film de protection de polariseur (220) est orthogonale à une direction de contraction à l'humidité du premier polariseur (210),
   une direction de contraction à la chaleur du deuxième film de protection de polariseur (320) est orthogonale à une direction de contraction à l'humidité du second polariseur (310), et
   le premier film de protection de polariseur (220) et le deuxième film de protection de polariseur (320) sont chacun des films étirés biaxialement puis traités thermiquement qui sont traités thermiquement à une température égale ou inférieure à une température de transition vitreuse respective de manière à avoir une contrainte de contraction thermique de 2,5 N/5 mm ou plus et 8 N/5 mm ou moins dans une direction transversale orthogonale à la direction de machine du film de protection de polariseur (12 ; 202 ;
   lorsqu'elle est mesurée après avoir été chauffé dans des conditions de 70 °C et de 0 % de HR ou plus et 20 % de HR ou moins pendant 75 minutes.

10. Dispositif d'affichage à cristaux liquides selon la revendication 9, dans lequel le premier film de protection de polariseur (220) et le deuxième film de protection de polariseur (320) présentent chacun une perméabilité à l'humidité de 0,001 $g/m^2$*jour ou plus et 1 000 $g/m^2$*jour ou moins.

11. Dispositif d'affichage à cristaux liquides selon la revendication 9, dans lequel la première plaque de polarisation (200) comprend en outre un troisième film de protection de polariseur (230) prévu sur le côté où se situe la cellule à cristaux liquides (100),

    la seconde plaque de polarisation (300) comprend en outre un quatrième film de protection de polariseur (330) prévu sur le côté où se situe la cellule à cristaux liquides (100),
    une contrainte de contraction thermique du premier film de protection de polariseur (220) est supérieure à celle du troisième film de protection de polariseur (230), et

une contrainte de contraction thermique du deuxième film de protection de polariseur (320) est supérieure à celle du quatrième film de protection de polariseur (330).

12. Dispositif d'affichage à cristaux liquides selon la revendication 9, dans lequel le premier film de protection de polariseur (220} est un film à base de polyéthylène présentant une valeur de Re de 5 000 nm ou plus, et le deuxième film de protection de polariseur (320) est un film à base de polyéthylène présentant une valeur de Re de 5 000 nm ou plus, un film acrylique présentant une valeur de Re de 1 000 nm ou moins, un film à base de polyéthylène présentant une valeur de Re de 1 000 nm ou moins, ou un film à base de cyclooléfine présentant une valeur de Re de 1 000 nm ou moins.

13. Dispositif d'affichage à cristaux liquides selon la revendication 9, dans lequel la cellule à cristaux liquides (100) est une cellule à cristaux liquides dans laquelle une couche de cristaux liquides est prévue entre deux substrats transparents présentant une épaisseur de 0,2 mm ou plus et de 1,0 mm ou moins.

14. Dispositif d'affichage à cristaux liquides selon la revendication 9, dans lequel après qu'un test à humidité élevée a été effectué en étant laissé à reposer dans une chambre à 20°C et 90 % de HR pendant 165 heures, une quantité de changement de la distance de flexion du dispositif d'affichage à cristaux liquides est de 1,0 mm ou moins, par comparaison à la distance de flexion initiale.

15. Dispositif d'affichage à cristaux liquides selon la revendication 9, dans lequel après qu'un test à haute température a été effectué en étant laissé à reposer dans une chambre dans des conditions de 70°C et de 0 %RH ou plus et 20 %RH ou moins pendant 168 heures, une quantité de changement de la distance de flexion du dispositif d'affichage à cristaux liquides est de 0,7 mm ou moins, par comparaison à la distance de flexion initiale.

[Figure 1A]

11
12
}10

[Figure 1B]

13
11
12
}10

[Figure 2A]

220 ⎤
210 ⎦ 200

100

310 ⎤
320 ⎦ 300

[Figure 2B]

220 ⎤
210 ⎥ 200
230 ⎦

100

330 ⎤
310 ⎥ 300
320 ⎦

[Figure 3]

**REFERENCES CITED IN THE DESCRIPTION**

**Patent documents cited in the description**

- KR 1020170094369
- US 2003072078 A1
- KR 101624072 B1
- KR 101669318 B1
- KR 1020060128731